# EUROPEAN PATENT APPLICATION

(11) **EP 4 815 414 A1**
(43) Date of publication of application: **30.09.2026**
(21) Application number: 26167659.7
(22) Date of filing: 25.03.2026
(51) Int. Cl.: H04M 1/24

(54) **ASSESSMENT MODULE FOR DIAGNOSTIC TESTING OF MOBILE DEVICES**

(30) Priority: 25.03.2025 GB 202504334
(71) Applicant: Neva Systems Limited, Chatham, Kent ME5 9FD (GB)
(72) Inventor: GLAZMAN, Gregory, Chatham, ME5 9FD (GB)
(74) Representative: Boult Wade Tennant LLP

(57) **Abstract**

An assessment module for evaluating a mobile device. The assessment module comprises an enclosure arranged to receive the mobile device to be assessed within a cavity defined by the enclosure, the enclosure housing at least one sensor arranged within the cavity. The assessment module further comprises a processor and memory. The memory stores computer-executable instructions that, when executed by the processor, cause the assessment module to perform certain steps. In a first step, the assessment module establishes a data connection with the mobile device, the data connection for exchange of data between the mobile device and the assessment module. A further step requires obtaining an outcome of one or more diagnostic test on the mobile device, each of the one or more diagnostic test for obtaining information on a characteristic of the mobile device or on the performance of a function of the mobile device. Another step comprises generating a report providing an evaluation of the mobile device based on the results of the one or more diagnostic test, for output to a user of the assessment module. The assessment module is further caused to receive, from the mobile device via the data connection, the outcome of one or more diagnostic test, and/or to obtain from the at least one sensor the outcome of one or more diagnostic test.

## Description

### Field of the disclosure

A module for assessment or evaluation of a mobile device or wireless communication device. The module receives the mobile device into an enclosure or housing of the module, and diagnostic tests are performed on the mobile device. The diagnostic tests assess the performance of one or more function of the mobile device.

### Background to the disclosure

The amount of waste generated every year that is comprised of disposed electrical or electronic equipment is rapidly increasing. Consumers often wish to update their mobile device to a newer device or model, but this means that they may wish to dispose of their older, superseded device. When consumers replace their mobile device, there is frequently an option to trade-in their previous device to a vendor, who may then refurbish and/or resell their old device. This typically allows the consumer to realise some value from their old device, but also permits the device to be reused or recycled in line with a growing preference for sustainability and reducing waste.

There is now a significant market in the resale of used or second-hand mobile devices. Said devices can be bought from a previous owner by a vendor and then refurbished and/or resold. In order to facilitate resale, the vendor must first assess a used mobile device to identify the appropriate value to offer to the consumer in exchange for their old device. The value will depend on the demonstration of the correct performance of the various functions of the device, as well as on the cosmetic condition of the device (including whether there are scratches or dents on the body or screen of the mobile device, for instance).

Often, a vendor will use a manual inspection of a mobile device in order to determine its value, and to determine whether the device can be reused rather than contribute to electronic waste. However, such a manual inspection may be time consuming, and may be subjective.

In view of this background, there is desired a system for improved physical and functional assessment of a mobile device, which is more objective and consistent.

### Summary of the disclosure

Described is an assessment module according to claim 1. The assessment module is a unit or robot for evaluating or assessing a mobile device. The mobile device may be a mobile telephone or tablet computer, for instance. The evaluation may comprise the carrying out of various diagnostic tests, which allow for the examination, inspection or testing of various aspects of the mobile device including cosmetic condition and the correct operation of the various functions of the device. The assessment module is in communication with the mobile device, such that data (including the output of various functional tests at the mobile device) can be delivered to the assessment module, or instructions can be exchanged between the mobile device and the assessment module in order to initiate functions at the mobile device to be tested by the assessment module.

The assessment module generates a report of the outcomes of the diagnostic tests performed. The report can provide a summary of the condition of the mobile device and its functioning. The report can, in some cases, provide a 'grade' or 'score' for the condition of the mobile device. In further examples, the grade or score can be converted to a estimated value for the mobile device, which might be a trade-in value or resale value.

The assessment module allows a vendor to accurately assess a mobile device, with a view to purchase or exchange of the mobile device for resale as a used or refurbished device. The assessment module provides a more straightforward, less time consuming and more objective appraisal of a device, in order to determine a fair value for resale. In this way, the assessment module encourages reuse and recycling of used mobile devices, keeping them from being placed in electronic waste disposal.

In a first aspect, there is described an assessment module for evaluating a mobile device, the assessment module comprising:
an enclosure arranged to receive the mobile device to be assessed within a cavity defined by the enclosure, the enclosure housing at least one sensor arranged within the cavity;
a processor; and
memory, the memory storing computer-executable instructions that, when executed by the processor, cause the assessment module to:
   establish a data connection with the mobile device, the data connection for exchange of data between the mobile device and the assessment module;
   obtain an outcome of one or more diagnostic test on the mobile device, each of the one or more diagnostic test for obtaining information on a characteristic of the mobile device or on the performance of a function of the mobile device; and
   generate a report providing an evaluation of the mobile device based on the results of the one or more diagnostic test, for output to a user of the assessment module;
   wherein the computer-executable instructions causing the assessment module to obtain an outcome of one or more diagnostic test on the mobile device comprises the computer-executable instructions causing the assessment module to:
      receive, from the mobile device via the data connection, the outcome of one or more diagnostic test; and/or
      obtain from the at least one sensor the outcome of one or more diagnostic test.

The enclosure is a housing, forming the outer walls of the assessment module. The enclosure houses or encloses a cavity, in which the mobile device to be assessed can be placed for performance of certain diagnostic tests, and in which other components of the assessment module (such as the rotation module, described below) are housed.

A processor and memory are housed within the assessment module. The processor is a computer processor which can execute computer readable instructions (i.e. a computer program) retrieved from the memory. The processor may be considered a controller, in some examples.

The processor controls certain aspects of the performance of the diagnostic tests for evaluation of the mobile device, and collates the outcomes of each test. First a data connection is established between the mobile device and the assessment module. Said data connection may be a wireless connection such as via a Bluetooth connection or via a Wi-Fi connection (for example, through a WiFi hotspot generated by the assessment module), or may be a wired connection. The wired connection may be a physical connection, connected at one end to the assessment module and at the other end connected to the mobile device via a connector (which may be attached to the mobile device by a user before placement of the mobile device inside the enclosure of the assessment module). The processor can then establish a data connection via the wired connection. Certain operating systems at the mobile device (such as Apple iOS) may require a wired connection, whereas other operating systems (such as Google Android) may be able to operate via a wireless connection.

The processor obtains the outcome of one or more diagnostic tests. Obtaining the outcome of one or more diagnostic test can include either, in a first option, obtaining the outcome of a diagnostic test from the mobile device, where that diagnostic test is performed at the mobile device itself, or, in a second option, can include obtaining the outcome directly, by the assessment module performing the diagnostic test on the mobile device. As an example, outcomes obtained according to the first option include (but are not limited to) a test of a microphone at the mobile device (for which a recording is made at the mobile device and sent to the assessment module), or the data recorded from various sensors at the mobile device (accelerometer, gyroscope or light lever sensor, for example, with a measured value sent to the assessment module). As an example, outcomes obtained according to the second option include (but are not limited to) images of the cosmetic condition of the outer surface of the mobile device from cameras at the assessment module, or recording of sounds broadcast from a speaker at the mobile device.

The assessment module obtains or collates the outcomes from all diagnostic tests performed and generates a report or summary of said outcomes. It will be understood that the larger the number of diagnostic tests that are performed on the mobile device, the more detailed the generated report will be. A more detailed report will provide a more complete and well-rounded evaluation of the condition of the mobile device. Beneficially, the presently described assessment module provides an option to perform more than 5, more that 10, more than 12, or even more than 15 different diagnostic tests on a single mobile device, each evaluating different aspects.

The assessment module may further comprise a speaker arranged to emit sound waves within the enclosure. The computer-executable instructions causing the assessment module to receive, from the mobile device via the data connection, the outcome of one or more diagnostic test may comprises the computer-executable instructions causing the assessment module to: receive, from the mobile device via the data connection, an instruction to emit an audio transmission from the speaker of the assessment module, the audio transmission for recording at one or more microphone at the mobile device; emit the audio transmission from the speaker of the assessment module; and receive, from the mobile device via the data connection, a recording of the audio transmission recorded at the one or more microphone at the mobile device. The computer-executable instructions may further cause the assessment module to: perform audio analysis of the recording of the audio transmission to obtain information on the performance of the microphone at the mobile device for inclusion in the report providing the evaluation of the mobile device. In other words, the diagnostic test may test the function of the microphone at the mobile device, by recording at the mobile device an audio transmission from a speaker at the assessment module, and then sending the recording to the assessment module over the data connection in order to allow the assessment module to perform audio analysis on the recording.

The computer-executable instructions causing the assessment module to perform audio analysis of the recording of the audio transmission may comprise the computer-executable instructions causing the assessment module to: compare a frequency spectrum of the recorded audio transmission to a frequency spectrum of the audio transmission emitted from the speaker of the assessment module; and determine a measure of similarity therebetween. Alternatively or additionally, the audio transmission may be a speech signal, and the computer-executable instructions causing the assessment module to perform audio analysis of the recording of the audio transmission may comprises the computer-executable instructions causing the assessment module to: determine a measure of similarity between the recorded speech signal and the speech signal emitted from the speaker of the assessment module. In either case, specific analysis of the recorded audio is carried out, to assess the performance of the microphone at the mobile device. The audio analysis can be performed by the assessment module due to the use of a specific, predefined audio transmission from the speaker, which can then be compared to the audio recorded at the mobile device. The described audio analysis provides more information than simply whether or not the microphone is functional, but can also provide information on how well it functions, for example by considering the quality and similarity of the recording at different volumes and across a range of frequencies.

One of the at least one sensor may comprises a microphone arranged to receive sound waves within the enclosure, and wherein the computer-executable instructions causing the assessment module to obtain from at least one sensor the outcome of one or more diagnostic test may comprise the computer-executable instructions causing the assessment module to: receive, from the mobile device via the data connection, an instruction to initiate recording of an audio broadcast from one or more speaker at the mobile device; and record the audio broadcast received at the microphone of the assessment module. The computer-executable instructions may further cause the assessment module to: perform audio analysis of the recorded audio broadcast to obtain information on the performance of the one or more speaker at the mobile device for inclusion in the report providing the evaluation of the mobile device. This diagnostic test acts to evaluate the functioning of the speaker at the mobile device, by recording an audio broadcast from the mobile device. The audio analysis can be performed by the assessment module due to the use of a specific, predefined audio broadcast from a speaker at the mobile device, which can then be compared to the audio recorded at the assessment module. The audio broadcast may be specified or sent to the mobile device by the assessment module over the data connection, at the commencement of the diagnostic test.

The computer-executable instructions causing the assessment module to perform audio analysis of the recorded audio broadcast may comprise the computer-executable instructions causing the assessment module to: compare a frequency spectrum of the recorded audio broadcast to the frequency spectrum of the specified audio broadcast emitted from the one or more speaker at the mobile device; and determine a measure of similarity therebetween. Alternatively or additionally, the audio broadcast may be a speech signal and the computer-executable instructions causing the assessment module to perform audio analysis of the recorded audio broadcast to obtain information on the performance of the one or more speaker at the mobile device may comprises the computer-executable instructions causing the assessment module to: determine a measure of similarity between the recorded speech signal and the speech signal emitted from the one or more speaker of the mobile device. In either case, specific analysis of the recorded audio is carried out to assess the performance of the speaker at the mobile device. The described analysis provides more information than simply whether or not the speaker is functional, but moreover can provide information on how well it functions, for example at different volumes and across a range of frequencies.

One of the at least one sensor may comprise a camera arranged within the enclosure of the assessment module to provide an image of at least one surface of the mobile device. The computer-executable instructions causing the assessment module to obtain from at least one sensor at the assessment module the outcome of one or more diagnostic test may comprises the computer-executable instructions causing the assessment module to: obtain one or more image of at least one surface of the mobile device from the camera. The computer-executable instructions may further cause the assessment module to: assess the cosmetic condition of the mobile device from the one or more image for inclusion in the report providing the evaluation of the mobile device. The camera may be arranged to be opposite a mobile device arranged in the assessment area of the assessment module (being the position the mobile device is arranged when enclosed in the assessment module for evaluation). In one example, the camera is arranged directly overhead of an assessment area. Optionally, more than one camera can be arranged inside the enclosure of the assessment module, to allow images to be obtained of the mobile device from different directions. From the images obtained by the one or more camera, the assessment module may be able to identify the presence and location of scratches, dents or other imperfections at any surface or edge of the mobile device.

Causing the assessment module to obtain one or more image of at least one surface of the mobile device may comprise causing the assessment module to obtain a plurality of images during rotation of the mobile device inside the enclosure, each of the plurality of images obtained at a different stage of the rotation. **In** other words, the assessment module may use a rotation mechanism, as described below and housed inside the enclosure of the assessment module, to rotate or flip the mobile device whilst inside the assessment module. The one or more cameras may each take images during the rotation. This means that, at some point during the rotation, every edge or surface of the mobile device is positioned opposite at least one camera so that it is imaged. Rotation allows the different surfaces of the mobile device to be imaged from different directions and perspective and so gives an improved likelihood of identifying any imperfection.

The computer-executable instructions causing the assessment module to obtain from at least one sensor at the assessment module the outcome of one or more diagnostic test may comprise the computer-executable instructions causing the assessment module to: receive, from the mobile device via the data connection, an instruction to initiate obtaining one or more image on a display screen of the mobile device during a period when the screen is illuminated; and obtain, at the camera arranged within the enclosure, one or more image of the display screen of the mobile device during a period when the screen is illuminated. The computer-executable instructions may further cause the assessment module to perform analysis of the image of the screen to obtain information on the performance of the display screen at the mobile device, the information for inclusion in the report providing the evaluation of the mobile device. This diagnostic test looks to check that all areas of the display screen of the mobile device operate or illuminate as expected. This test can identify dull spots or dead pixels on the display screen of the mobile device. In some cases, the screen at the mobile device can be illuminated with more than one colour (for instance a colour wheel), and analysis of the image of the screen obtained by the camera at the assessment module may a confirm the correct colour representation at the display screen of the mobile device. **In** some cases, the illumination at the screen of the mobile device may be changed over time (for instance, cycling through different colours), with a succession of images obtained by the camera at the assessment module at intervals during the changing illumination of the screen. The succession of images can then be analysed to confirm a correct colour representation at the display screen.

The enclosure may further comprise one or more graphical object, the one or more graphical object arranged inside the enclosure to be visible to at least one camera at the mobile device within the cavity defined by the enclosure. The computer-executable instructions may further cause the assessment module to: receive from the mobile device, via the data connection, at least one image of the one or more graphical object obtained by the at least one camera at the mobile device; and perform analysis of the at least one image of the one or more graphical object, to obtain information on the performance of the at least one camera at the mobile device for inclusion in the report providing the evaluation of the mobile device. This diagnostic test looks to test one or more camera of the mobile device, by obtaining images of specific objects so that the obtained images can be compared to the known graphical object. This diagnostic test allows a consistent analysis of the quality of the images produced by the camera of the mobile device. The graphical object may be any image or graphical representation to allow testing of the camera. The graphical object may be mounted on an inner wall of the enclosure of the assessment module (e.g. as a sticker). Each camera at the mobile device may be tested in the same way in different diagnostic tests. In some cases (for example, if the mobile device has a front and back camera), the diagnostic test may be repeated after rotation of the mobile device in the assessment module by the rotation mechanism described below (the rotation causing different cameras at the mobile device to be positioned opposite the graphical object mounted inside the assessment module).

One of the one or more graphical object may be a QR code, and wherein the computer-executable instructions causing the assessment module to perform analysis of the at least one image of the one or more graphical object may comprises the computer-executable instructions further causing the assessment module to analyse the performance of the auto-focus function of the at least one camera at the mobile device. Alternatively or additionally, one of the one or more graphical object is a graphical object comprising at least three colours. The computer-executable instructions causing the assessment module to perform analysis of the at least one image of the one or more graphical object may comprise the computer-executable instructions further causing the assessment module to analyse the colour accuracy of the at least three colours in the at least one image of the one or more graphical object. The different types of graphical object test different aspects of the camera of the mobile device and the quality of the images that the camera obtains. In some cases, use of different types of graphical object can allow the auto-focus function of the camera at the mobile device to be tested.

The assessment module configured to receive, from the mobile device, the result of one or more diagnostic test performed at the mobile device may comprise the assessment module configured to: receive an indication of the presence or absence of a physical or embedded SIM within the mobile device, and optionally a test of the ability of an identified physical or embedded SIM to connect to a telecommunication network; and/or receive a geolocation signal from a global navigation satellite system (GNSS) transmitter, and wherein the processor is further configured to compare the location identified by the geolocation signal with a predetermined geographical location of the assessment module to obtain information on the performance of a GNSS receiver at the mobile device.

The assessment module configured to obtain an outcome of one or more diagnostic test on the mobile device may comprise the assessment module configured to: establish a Bluetooth communication between the assessment module and the mobile device, to determine functionality of Bluetooth capability at the mobile device; and/or establish a WiFi communication between the assessment module and the mobile device to determine functionality of WiFi capability at the mobile device; and/or receive, from the mobile device, an assessment of the health of the battery of the mobile device; and/or receive, from the mobile device, an identification of the presence of any non-original components within the mobile device.

The assessment module may further comprise a microphone arranged to receive sound waves within the enclosure. The assessment module configured to obtain from at least one sensor at the assessment module the outcome of one or more diagnostic test performed on the mobile device by the assessment module, the at least one sensor being the microphone, may comprise the assessment module configured to: receive an instruction from the mobile device, via the data connection, to initiate a recording at the microphone during a subsequent period of activation of a vibration motor at the mobile device; record sound waves received at the microphone of the assessment module during the period of activation of the vibration motor at the mobile device. The processor may be further configured to determine the presence or absence of sounds from the vibration motor in the recording of the sound waves received at the microphone of the assessment module, to obtain information on the performance of the vibration motor at the mobile device. This diagnostic test checks that the vibration motor (used to alert a user of the mobile device of a notification or alarm) correctly activates and functions.

The assessment module may further comprise one or more cameras arranged within the enclosure. The assessment module configured to obtain from at least one sensor at the assessment module the outcome of one or more diagnostic test performed on the mobile device by the assessment module, the at least one sensor being the one or more cameras, may comprise the assessment module configured to: receive an instruction from the mobile device, via the data connection, to initiate obtaining of one or more image from the one or more cameras during illumination of a camera flash at the mobile device; and obtain one or more image from the one or more cameras during illumination of the camera flash at the mobile device. The assessment module may be further configured to: determine the presence or absence of light from the camera flash at the mobile device in the obtained one or more image, to obtain information on the performance of the camera flash at the mobile device. This diagnostic test checks that the mobile device correctly illuminates the camera flash, and with the light intensity that is expected.

The assessment module configured to obtain an outcome of one or more diagnostic test on the mobile device may comprise the assessment module configured to: receive a measurement of a light level at a light sensor at the mobile device; and/or receive a measurement of an orientation and/or angular velocity by a gyroscope at the mobile device; and/or receive a measurement of a bearing of the mobile device at a compass at the mobile device; and/or receive a measurement of an acceleration of the mobile device at an accelerometer at the mobile device; and/or receive a measurement of an air pressure at a barometer at the mobile device; and/or receive from the mobile device measurements of one or more touch interaction received at the different areas of the touchscreen mobile device, in response to instructions issued to a user of the mobile device to provide touch inputs at different areas of the touchscreen. These diagnostic tests check the output or measurement from various sensors at the mobile device. In a number of cases, the user provides an input in order to test a sensor, for instance by following instructions on the screen of the mobile device. As such, these tests may be applied prior to or after the mobile device is placed inside the enclosure of the assessment module. Ideally, the measured values from the sensor are compared to a known or expected value, for instance compared to a range of 'average' or 'typical' values for the given parameter in normal use and where the sensors are working correctly.

The assessment module may further comprise a mechanism for rotation of the mobile device inside the enclosure. The mechanism for rotation can be used to rotate or flip the mobile device inside the enclosure of the assessment module. This allows the cameras arranged within the assessment module to obtain images of different surface of the mobile device, and from different aspects, as the mobile device is rotated. It also allows other diagnostic tests to be performs, for instance a test of a front camera at the mobile device before rotation, and a test of a back camera at the mobile device after rotation.

The rotation mechanism may comprise: a base portion; a flat support plate, for supporting the mobile device received in the enclosure, wherein, in a first position, the mobile device is arranged having a first planar face opposing a planar surface of the flat support plate and a second planar face, which is opposite to the first planar face, facing outwardly into the cavity defined by the enclosure; and a concave support plate arranged at a fixed angle to an upper surface of the base portion, the concave support plate for receiving the mobile device during rotation. Tilting of the flat support plate relative to the concave support plate may cause the mobile device to pivot about one edge of the mobile device, so as to tip the mobile device towards the concave support plate, wherein the concave support plate is configured to receive the mobile device so that, in a second position, the first planar face of the mobile device is facing outwardly into the cavity defined by the enclosure. As such, the mobile device is rotated in a controlled fashion, during which the mobile device is adequately supported throughout to avoid any damage to the mobile device during rotation.

The second planar face of the mobile device may terminate at a second perimeter edge, and the concave support plate may be configured to receive the mobile device so that the concave support plate contacts the mobile device at a portion of the second perimeter edge. The concave plate allows devices of different shapes and having different outer contours to be adequately supported, including folding mobile devices.

The concave support plate may be arranged to be moveable relative to the flat support plate to change a separation therebetween, and wherein after the concave support plate receiving the mobile device, increasing the separation of the concave support plate from the flat support plate causes the mobile device to further pivot about the one edge of the mobile device until the mobile device, in a third position, is arranged having at least part of the second planar face opposing the upper surface of the base portion.

In some cases, the mobile device in the second position has been rotated more than 90 degrees about the one edge of the mobile device compared to the first position. In some cases, the mobile device in the third position has been rotated 180 degrees about the one edge of the mobile device compared to the first position.

In a second aspect there is a system, comprising: the assessment module described above; and a mobile device for assessment, wherein the mobile device is arranged in communication with the assessment module. In some cases, the mobile device is arranged inside the enclosure of the assessment module.

The mobile device may comprises a processor and memory, the memory storing computer-executable instructions that, when executed by the processor, may cause the mobile device to: perform one or more diagnostic test, each of the one or more diagnostic test for obtaining information on a characteristic of the mobile device or on the performance of a function of the mobile device; and/or communicate to the assessment module the outcome of the one or more diagnostic test on the mobile device, each of the one or more diagnostic test for obtaining information on a characteristic of the mobile device or on the performance of a function of the mobile device. The computer-executable instructions, when executed by the processor, may further cause the mobile device to: initiate one or more function at the mobile device, the performance of the function be monitored by the assessment module. In some cases, communication from the mobile device to the assessment module may take place via a software application or web browser-based assessment at the mobile device. In some cases, the user may need to provide inputs to the mobile device, to perform certain of the diagnostic tests.

In a third aspect, there is a method for assessment of a mobile device, the method comprising:
establishing a data connection for exchange of data between a mobile device to be assessed and an assessment module;
obtaining an outcome of one or more diagnostic test on the mobile device, each of the one or more diagnostic test for obtaining information on a characteristic of the mobile device or on the performance of a function of the mobile device;
generating a report providing an evaluation of the mobile device based on the results of the one or more diagnostic test, for output to a user of the assessment module;
wherein obtaining an outcome of one or more diagnostic test on the mobile device comprises:
   receiving, from the mobile device via the data connection, the outcome of one or more diagnostic test; and/or
   obtaining, from at least one sensor arranged at the assessment module, the outcome of one or more diagnostic test.

It will be understood that the discussion of various features with respect to the assessment module and system, above, applies equally to common features of the method.

The method may take place across both the mobile device and the assessment module. A software application may be downloaded at the mobile device prior to commencing the assessment, and may act to interact with the assessment module, and initiate certain of the diagnostic tests. In some cases, the software application at the mobile device may send an instruction to the assessment module that it is initiating a particular diagnostic test, and the assessment module should measure the outcome. The software application at the mobile device may simply provide to the assessment module the outcome of a diagnostic test that takes place only at the mobile device.

Some diagnostic tests may require user input (for example, user interaction with the touch screen at the mobile device, to test the touch sensors in the touch screen), and the software application will lead the user though such tests, by issuing instructions for the user's input via the mobile device display. Tests that require user input will take place before or after placing the mobile device into the assessment module, but will require a data connection to have been established between the assessment module and the mobile device for exchange of information or outcomes of the one or more diagnostic test.

In alternative, a web browser-based assessment can be used in place of the software application. Again, the web browser-based assessment can lead the user though certain instructions where their input is required.

Receiving, from the mobile device via the data connection, the outcome of one or more diagnostic test may comprise: receiving, from the mobile device via the data connection, an instruction to emit an audio transmission from the speaker of the assessment module, the audio transmission for recording at one or more microphone at the mobile device; emitting the audio transmission from the speaker of the assessment module; receiving, from the mobile device via the data connection, a recording of the audio transmission recorded at the one or more microphone at the mobile device. The method may further comprise performing audio analysis of the recording of the audio transmission to obtain information on the performance of the microphone at the mobile device for inclusion in the report providing the evaluation of the mobile device. For instance, the mobile device (for instance via the software application at the device) may issue the instruction to emit, and may then return the recording of the audio transmission to the assessment device after it has been recorded at the mobile device.

Performing audio analysis of the recording of the audio transmission may comprise: comparing a frequency spectrum of the recorded audio transmission to a frequency spectrum of the audio transmission emitted from the speaker of the assessment module; and determining a measure of similarity therebetween. These steps would take place at the assessment module.

The audio broadcast may be a speech signal, and performing audio analysis of the recording of the audio transmission may comprise: determining a measure of similarity between the recorded speech signal and the speech signal emitted from the speaker of the assessment module. These steps would take place at the assessment module.

One of the at least one sensor may comprise a microphone arranged to receive sound waves within the enclosure. Then, obtaining from at least one sensor the outcome of one or more diagnostic test may comprise: receiving, from the mobile device via the data connection, an instruction to initiate recording of an audio broadcast from one or more speaker at the mobile device; and recording the audio broadcast received at the microphone of the assessment module. The method may further comprise performing audio analysis of the recorded audio broadcast to obtain information on the performance of the one or more speaker at the mobile device for inclusion in the report providing the evaluation of the mobile device. For instance, the mobile device (for instance, via the software application) may send the instructions to initiate recording, and then the mobile device may emit the audio broadcast to be recorded by the assessment module.

Performing audio analysis of the recorded audio broadcast may comprise comparing a frequency spectrum of the recorded audio broadcast to the frequency spectrum of the specified audio broadcast emitted from the one or more speaker at the mobile device; and determining a measure of similarity therebetween. This step would take place at the assessment module.

The audio broadcast may be a speech signal, and performing audio analysis of the recorded audio broadcast may comprise determining a measure of similarity between the recorded speech signal and the speech signal emitted from the one or more speaker of the mobile device. This step would take place at the assessment module.

One of the at least one sensor may comprise a camera arranged within the enclosure to provide an image of a surface of the mobile device. Then, causing the assessment module to obtain from at least one sensor at the assessment module the outcome of one or more diagnostic test may comprise: obtaining one or more image of at least one surface of the mobile device from the camera. The method may further comprise assessing the cosmetic condition of the mobile device from the one or more image for inclusion in the report providing the evaluation of the mobile device. All these steps are performed by the assessment module on the mobile device.

The method further comprising rotating the mobile device within the assessment module, in order to obtain a plurality of images during rotation of the mobile device inside the enclosure, each of the plurality of images obtained at a different stage of the rotation. The assessment module may rotate the device using a rotation mechanism housed in the enclosure of the assessment module.

Obtaining from at least one sensor at the assessment module the outcome of one or more diagnostic test may comprise: receiving, from the mobile device via the data connection, an instruction to initiate obtaining one or more image on a display screen of the mobile device during a period when the screen is illuminated; and obtaining, at the camera arranged within the enclosure, one or more image of the display screen of the mobile device during a period when the screen is illuminated. The method may further comprise performing analysis of the image of the screen to obtain information on the performance of the display screen at the mobile device for inclusion in the report providing the evaluation of the mobile device. The mobile device may initiate the instruction, and then illuminate the screen at the mobile device for the image to be obtained by the one or more camera at the assessment module.

One or more graphical object may be arranged inside the enclosure, to be visible to at least one camera at the mobile device within the cavity defined by the enclosure. The method may further comprise receiving from the mobile device, via the data connection, at least one image of the one or more graphical object obtained by the at least one camera at the mobile device; and performing analysis of the at least one image of the one or more graphical object, to obtain information on the performance of the at least one camera at the mobile device for inclusion in the report providing the evaluation of the mobile device. The mobile device may obtain the at least one image, and then send the at least one image to the assessment module. The analysis of the at least one image may take place at the assessment module.

One of the one or more graphical object may be a QR code, and performing analysis of the at least one image of the one or more graphical object may comprise causing the assessment module to analyse the performance of the auto-focus function of the at least one camera at the mobile device. Alternatively or additionally, one of the one or more graphical object may be a graphical object comprising at least three colours, and performing analysis of the at least one image of the one or more graphical object may comprise analysing the colour accuracy of the at least three colours in the at least one image of the one or more graphical object

Receiving, from the mobile device, the result of one or more diagnostic test performed at the mobile device may comprise receiving an indication of the presence or absence of a physical or embedded SIM within the mobile device, and optionally a test of the ability of an identified physical or embedded SIM to connect to a telecommunication network; and/or receiving a geolocation signal from a global navigation satellite system (GNSS) transmitter, and wherein the processor is further configured to compare the location identified by the geolocation signal with a predetermined geographical location of the assessment module to obtain information on the performance of a GNSS receiver at the mobile device. For instance, the information may be sent from the mobile device to the assessment module (for example, via the software application).

Obtaining an outcome of one or more diagnostic test on the mobile device may comprise: establishing a Bluetooth communication between the assessment module and the mobile device, to determine functionality of Bluetooth capability at the mobile device; and/or establishing a WiFi communication between the assessment module and the mobile device to determine functionality of WiFi capability at the mobile device; and/or receiving, from the mobile device, an assessment of the health of the battery of the mobile device; and/or receiving, from the mobile device, an identification of the presence of any non-original components within the mobile device. For instance, the information may be sent from the mobile device to the assessment module (via the software application), or the assessment module may be able to identify whether or not the Bluetooth or WiFi communication has been established, directly.

The assessment module may further comprise a microphone arranged to receive sound waves within the enclosure, and wherein obtaining from at least one sensor at the assessment module the outcome of one or more diagnostic test performed on the mobile device by the assessment module, the at least one sensor being the microphone, may comprise: receiving an instruction from the mobile device, via the data connection, to initiate a recording at the microphone during a subsequent period of activation of a vibration motor at the mobile device; recording sound waves received at the microphone of the assessment module during the period of activation of the vibration motor at the mobile device. The method may further comprise determining the presence or absence of sounds from the vibration motor in the recording of the sound waves received at the microphone of the assessment module, to obtain information on the performance of the vibration motor at the mobile device. The instruction may be sent by the mobile device, before the mobile device activates its vibration motor. The recording and determining steps may take place at the assessment module.

The assessment module may further comprise one or more cameras arranged within the enclosure, and obtaining from at least one sensor at the assessment module the outcome of one or more diagnostic test performed on the mobile device by the assessment module, the at least one sensor being the one or more cameras, may comprise: receiving an instruction from the mobile device, via the data connection, to initiate obtaining of one or more image from the one or more cameras during illumination of a camera flash at the mobile device; obtaining one or more image from the one or more cameras during illumination of the camera flash at the mobile device. The method may further comprise determining the presence or absence of light from the camera flash at the mobile device in the obtained one or more image, to obtain information on the performance of the camera flash at the mobile device. The instruction may be sent by the mobile device, before the mobile device illuminates its camera flash. The obtaining and determining steps may take place at the assessment module.

Obtaining an outcome of one or more diagnostic test on the mobile device may comprise: receiving a measurement of a light level at a light sensor at the mobile device; and/or receiving a measurement of an orientation and/or angular velocity by a gyroscope at the mobile device; and/or receiving a measurement of a bearing of the mobile device at a compass at the mobile device; and/or receiving a measurement of an acceleration of the mobile device at an accelerometer at the mobile device; and/or receiving a measurement of an air pressure at a barometer at the mobile device; and/or receiving from the mobile device measurements of one or more touch interaction received at the different areas of the touchscreen mobile device, in response to instructions issued to a user of the mobile device to provide touch inputs at different areas of the touchscreen. The information may be collected via the software application or web browser-based assessment at the mobile device (for instance, after issuing instructions to a user via the display of the mobile device, to obtain the user's input. The mobile device may then provide the results of the test to the assessment module.

The following numbered clauses show further illustrative examples only:
1. An assessment module for evaluating a mobile device, the assessment module comprising:
   an enclosure arranged to receive the mobile device to be assessed within a cavity defined by the enclosure, the enclosure housing at least one sensor arranged within the cavity;
   a processor; and
   memory, the memory storing computer-executable instructions that, when executed by the processor, cause the assessment module to:
      establish a data connection with the mobile device, the data connection for exchange of data between the mobile device and the assessment module;
      obtain an outcome of one or more diagnostic test on the mobile device, each of the one or more diagnostic test for obtaining information on a characteristic of the mobile device or on the performance of a function of the mobile device; and
      generate a report providing an evaluation of the mobile device based on the results of the one or more diagnostic test, for output to a user of the assessment module;
      wherein the computer-executable instructions causing the assessment module to obtain an outcome of one or more diagnostic test on the mobile device comprises the computer-executable instructions causing the assessment module to:
         receive, from the mobile device via the data connection, the outcome of one or more diagnostic test; and/or
         obtain from the at least one sensor the outcome of one or more diagnostic test.
2. The assessment module of clause 1, wherein the assessment module further comprises a speaker arranged to emit sound waves within the enclosure, and wherein the computer-executable instructions causing the assessment module to receive, from the mobile device via the data connection, the outcome of one or more diagnostic test comprises the computer-executable instructions causing the assessment module to:
   receive, from the mobile device via the data connection, an instruction to emit an audio transmission from the speaker of the assessment module, the audio transmission for recording at one or more microphone at the mobile device;
   emit the audio transmission from the speaker of the assessment module;
   receive, from the mobile device via the data connection, a recording of the audio transmission recorded at the one or more microphone at the mobile device; and
   wherein the computer-executable instructions further cause the assessment module to:
      perform audio analysis of the recording of the audio transmission to obtain information on the performance of the microphone at the mobile device for inclusion in the report providing the evaluation of the mobile device.
3. The assessment module of clause 2, wherein the computer-executable instructions causing the assessment module to perform audio analysis of the recording of the audio transmission comprises the computer-executable instructions causing the assessment module to:
   compare a frequency spectrum of the recorded audio transmission to a frequency spectrum of the audio transmission emitted from the speaker of the assessment module; and
   determine a measure of similarity therebetween.
4. The assessment module of clause 2 or clause 3, wherein the audio transmission is a speech signal, and the computer-executable instructions causing the assessment module to perform audio analysis of the recording of the audio transmission comprises the computer-executable instructions causing the assessment module to:
   determine a measure of similarity between the recorded speech signal and the speech signal emitted from the speaker of the assessment module.
5. The assessment module of any preceding clause, wherein one of the at least one sensor comprises a microphone arranged to receive sound waves within the enclosure, and wherein the computer-executable instructions causing the assessment module to obtain from at least one sensor the outcome of one or more diagnostic test comprises the computer-executable instructions causing the assessment module to:
   receive, from the mobile device via the data connection, an instruction to initiate recording of an audio broadcast from one or more speaker at the mobile device;
   record the audio broadcast received at the microphone of the assessment module;
   wherein the computer-executable instructions further cause the assessment module to:
      perform audio analysis of the recorded audio broadcast to obtain information on the performance of the one or more speaker at the mobile device for inclusion in the report providing the evaluation of the mobile device.
6. The assessment module of clause 5, wherein the computer-executable instructions causing the assessment module to perform audio analysis of the recorded audio broadcast comprises the computer-executable instructions causing the assessment module to:
   compare a frequency spectrum of the recorded audio broadcast to the frequency spectrum of the specified audio broadcast emitted from the one or more speaker at the mobile device; and
   determine a measure of similarity therebetween.
7. The assessment module of clause 5 or clause 6, wherein the audio broadcast is a speech signal and the computer-executable instructions causing the assessment module to perform audio analysis of the recorded audio broadcast to obtain information on the performance of the one or more speaker at the mobile device comprises the computer-executable instructions causing the assessment module to:
   determine a measure of similarity between the recorded speech signal and the speech signal emitted from the one or more speaker of the mobile device.
8. The assessment module of any preceding clause, wherein one of the at least one sensor comprises a camera arranged within the enclosure to provide an image of a surface of the mobile device, and wherein the computer-executable instructions causing the assessment module to obtain from at least one sensor at the assessment module the outcome of one or more diagnostic test comprises the computer-executable instructions causing the assessment module to:
   obtain one or more image of at least one surface of the mobile device from the camera;
   and wherein the computer-executable instructions further cause the assessment module to:
      assess the cosmetic condition of the mobile device from the one or more image for inclusion in the report providing the evaluation of the mobile device.
9. The assessment module of clause 8, wherein causing the assessment module to obtain one or more image of at least one surface of the mobile device comprises causing the assessment module to obtain a plurality of images during rotation of the mobile device inside the enclosure, each of the plurality of images obtained at a different stage of the rotation.
10. The assessment module of clause 8 or 9, wherein the computer-executable instructions causing the assessment module to obtain from at least one sensor at the assessment module the outcome of one or more diagnostic test comprises the computer-executable instructions causing the assessment module to:
   receive, from the mobile device via the data connection, an instruction to initiate obtaining one or more image on a display screen of the mobile device during a period when the screen is illuminated;
   obtain, at the camera arranged within the enclosure, one or more image of the display screen of the mobile device during a period when the screen is illuminated;
   and wherein the assessment module is further configured to:
      perform analysis of the image of the screen to obtain information on the performance of the display screen at the mobile device for inclusion in the report providing the evaluation of the mobile device.
11. The assessment module of any one of clauses 8 to 10, wherein the enclosure further comprises one or more graphical object, the one or more graphical object arranged inside the enclosure to be visible to at least one camera at the mobile device within the cavity defined by the enclosure, the computer-executable instructions further causing the assessment module to:
   receive from the mobile device, via the data connection, at least one image of the one or more graphical object obtained by the at least one camera at the mobile device; and
   perform analysis of the at least one image of the one or more graphical object, to obtain information on the performance of the at least one camera at the mobile device for inclusion in the report providing the evaluation of the mobile device.
12. The assessment module of clause 11, wherein one of the one or more graphical object is a QR code, and wherein the computer-executable instructions causing the assessment module to perform analysis of the at least one image of the one or more graphical object comprises the computer-executable instructions further causing the assessment module to analyse the performance of the auto-focus function of the at least one camera at the mobile device.
13. The assessment module of clause 11 or clause 12, wherein one of the one or more graphical object is a graphical object comprising at least three colours, and wherein the computer-executable instructions causing the assessment module to perform analysis of the at least one image of the one or more graphical object comprises the computer-executable instructions further causing the assessment module to analyse the colour accuracy of the at least three colours in the at least one image of the one or more graphical object.
14. The assessment module of any preceding clause, wherein the assessment module configured to receive, from the mobile device, the result of one or more diagnostic test performed at the mobile device comprises the assessment module configured to:
   receive an indication of the presence or absence of a physical or embedded SIM within the mobile device, and optionally a test of the ability of an identified physical or embedded SIM to connect to a telecommunication network; and/or
   receive a geolocation signal from a global navigation satellite system (GNSS) transmitter, and wherein the processor is further configured to compare the location identified by the geolocation signal with a predetermined geographical location of the assessment module to obtain information on the performance of a GNSS receiver at the mobile device.
15. The assessment module of any preceding clause, wherein the assessment module configured to obtain an outcome of one or more diagnostic test on the mobile device comprises the assessment module configured to:
   establish a Bluetooth communication between the assessment module and the mobile device, to determine functionality of Bluetooth capability at the mobile device; and/or
   establish a WiFi communication between the assessment module and the mobile device to determine functionality of WiFi capability at the mobile device; and/or
   receive, from the mobile device, an assessment of the health of the battery of the mobile device; and/or
   receive, from the mobile device, an identification of the presence of any non-original components within the mobile device.
16. The assessment module of any preceding clause, further comprising a microphone arranged to receive sound waves within the enclosure, and wherein the assessment module configured to obtain from at least one sensor at the assessment module the outcome of one or more diagnostic test performed on the mobile device by the assessment module, the at least one sensor being the microphone, comprises the assessment module configured to:
   receive an instruction from the mobile device, via the data connection, to initiate a recording at the microphone during a subsequent period of activation of a vibration motor at the mobile device;
   record sound waves received at the microphone of the assessment module during the period of activation of the vibration motor at the mobile device;
   and wherein the processor is further configured to:
      determine the presence or absence of sounds from the vibration motor in the recording of the sound waves received at the microphone of the assessment module, to obtain information on the performance of the vibration motor at the mobile device.
17. The assessment module of any preceding clause, further comprising one or more cameras arranged within the enclosure, and wherein the assessment module configured to obtain from at least one sensor at the assessment module the outcome of one or more diagnostic test performed on the mobile device by the assessment module, the at least one sensor being the one or more cameras, comprises the assessment module configured to:
   receive an instruction from the mobile device, via the data connection, to initiate obtaining of one or more image from the one or more cameras during illumination of a camera flash at the mobile device;
   obtain one or more image from the one or more cameras during illumination of the camera flash at the mobile device;
   and wherein the assessment module is further configured to:
      determine the presence or absence of light from the camera flash at the mobile device in the obtained one or more image, to obtain information on the performance of the camera flash at the mobile device.
18. The assessment module of any preceding clause, wherein the assessment module configured to obtain an outcome of one or more diagnostic test on the mobile device comprises the assessment module configured to:
   receive a measurement of a light level at a light sensor at the mobile device; and/or
   receive a measurement of an orientation and/or angular velocity by a gyroscope at the mobile device; and/or
   receive a measurement of a bearing of the mobile device at a compass at the mobile device; and/or
   receive a measurement of an acceleration of the mobile device at an accelerometer at the mobile device; and/or
   receive a measurement of an air pressure at a barometer at the mobile device; and/or
   receive from the mobile device measurements of one or more touch interaction received at the different areas of the touchscreen mobile device, in response to instructions issued to a user of the mobile device to provide touch inputs at different areas of the touchscreen.
19. The assessment module of any preceding clause, further comprising a mechanism for rotation of the mobile device inside the enclosure, the mechanism comprising:
   a base portion;
   a flat support plate, for supporting the mobile device received in the enclosure, wherein, in a first position, the mobile device is arranged having a first planar face opposing a planar surface of the flat support plate and a second planar face, which is opposite to the first planar face, facing outwardly into the cavity defined by the enclosure;
   a concave support plate arranged at a fixed angle to an upper surface of the base portion, the concave support plate for receiving the mobile device during rotation;
   wherein tilting of the flat support plate relative to the concave support plate causes the mobile device to pivot about one edge of the mobile device, so as to tip the mobile device towards the concave support plate, wherein the concave support plate is configured to receive the mobile device so that, in a second position, the first planar face of the mobile device is facing outwardly into the cavity defined by the enclosure.
20. The assessment module of clause 19, wherein the second planar face of the mobile device terminates at a second perimeter edge, wherein the concave support plate is configured to receive the mobile device so that the concave support plate contacts the mobile device at a portion of the second perimeter edge.
21. The assessment module of clause 19 or 20, wherein the concave support plate is arranged to be moveable relative to the flat support plate to change a separation therebetween, and wherein after the concave support plate receiving the mobile device, increasing the separation of the concave support plate from the flat support plate causes the mobile device to further pivot about the one edge of the mobile device until the mobile device, in a third position, is arranged having at least part of the second planar face opposing the upper surface of the base portion.
22. The assessment module of any one of clauses 19 to 21, wherein the mobile device in the second position has been rotated more than 90 degrees about the one edge of the mobile device compared to the first position.
23. The assessment module of clause 21 or 22, wherein the mobile device in the third position has been rotated 180 degrees about the one edge of the mobile device compared to the first position.
24. A system, comprising:
   the assessment module of any one of clauses 1 to 23; and
   a mobile device for assessment, wherein the mobile device is arranged in communication with the assessment module.
25. The system of clause 24, wherein the mobile device comprises a processor and memory, the memory storing computer-executable instructions that, when executed by the processor, cause the mobile device to:
   perform one or more diagnostic test, each of the one or more diagnostic test for obtaining information on the performance of a function of the mobile device; and
   communicate to the assessment module the outcome of the one or more diagnostic test on the mobile device, each of the one or more diagnostic test for obtaining information on the performance of a function of the mobile device; and/or
   wherein the computer-executable instructions, when executed by the processor, further cause the mobile device to:
   initiate one or more function at the mobile device, the performance of the function be monitored by the assessment module.

### Brief description of the figures

The present invention may be put into practice in a number of ways, and embodiments will now be described by way of example only and with reference to the accompanying drawings, in which:
FIGURE 1 is a system diagram for an assessment module for evaluating a mobile device according to an example. FIGURE 1(a) shows the components of the assessment module, and FIGURE 1(b) shows the components of the mobile device for assessment;
FIGURE 2 shows a view of a first orientation of the assessment module with the enclosure closed;
FIGURE 3 shows a view of a second orientation of the assessment module with the enclosure closed;
FIGURE 4 shows a view of a first side of the assessment module, including the display screen;
FIGURE 5 shows a view of the assessment module with the enclosure open. FIGURE 5(a) shows a perspective view of the assessment module in the second orientation, and FIGURE 5(b) shows a cross-sectional view;
FIGURE 6 shows the rotation mechanism in a first configuration. FIGURE 6(a) shows a perspective view, and FIGURE 6(b) shows a cross-sectional view;
FIGURE 7 shows a cross-sectional view of the rotation mechanism in a second configuration;
FIGURE 8 shows a perspective view of the rotation mechanism in a third configuration;
FIGURE 9 shows the rotation mechanism in a fourth configuration. FIGURE 9(a) shows a perspective view, and FIGURE 9(b) shows a cross-sectional view;
FIGURE 10 shows a cross-sectional view of the rotation mechanism in a fifth configuration;
FIGURE 11 shows the rotation mechanism in a sixth configuration. FIGURE 11(a) shows a perspective view, and FIGURE 11(b) shows a cross-sectional view;
FIGURE 12 shows a view of the assessment module in the first orientation with the enclosure open and after rotation of the mobile device; and
FIGURE 13 shows a cross-sectional view of the concave support plate.

It should be noted that the figures are illustrated for simplicity and are not necessarily drawn to scale. Like features are provided with the same reference numerals.

### Detailed description of certain examples

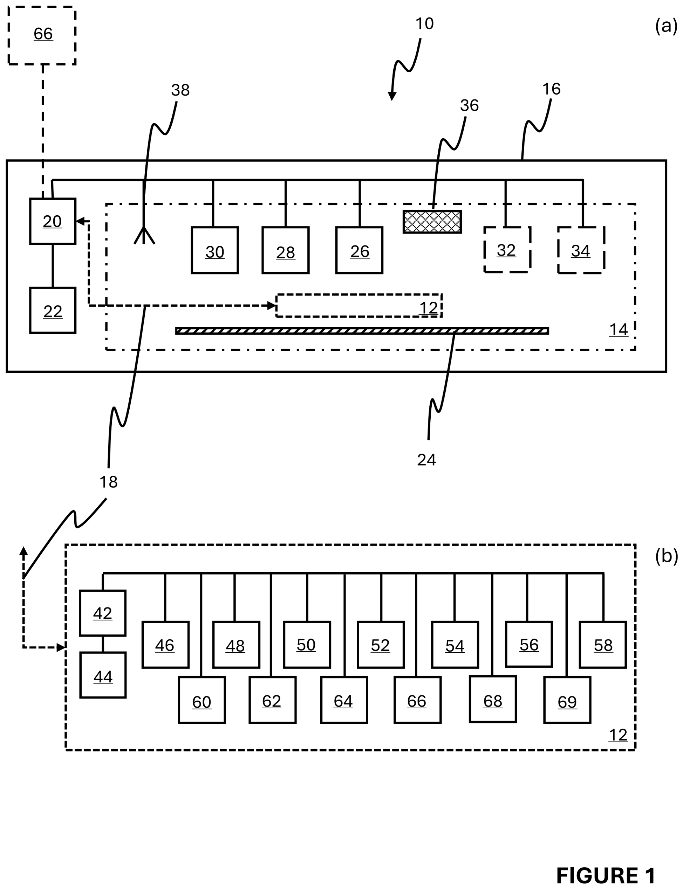

With reference to FIGURE 1, an assessment module 10 is shown in FIGURE 1(a) having a mobile device 12 to be assessed arranged within a cavity 14 defined by an enclosure 16 or housing of the assessment module. The mobile device 12 to be assessed is illustrated in more detail in FIGURE 1(b). The mobile device 12 may be any wireless communication device, such as a mobile telephone or tablet computer. The assessment module 10 is configured to assess or evaluate various physical and functional characteristics of the mobile device 12, in order to generate a report summarising the same.

The assessment module 10 and the mobile device 12 are communicatively coupled by a data connection 18 to allow data to be exchanged. Said data connection 18 may be a wired connection or a wireless connection. The wired connection may be provided by the user plugging a connector of a wire into the mobile device 12 to be tested, before it is placed inside the enclosure 16. In this case, the other end of the wire is connected to the assessment module 10 with a communicative coupling. The wireless connection may be established by connection of the mobile device 12 to, for instance, a WiFi hotspot generated by the assessment module 10.

The assessment module comprises a processor 20 and memory 22. The memory 22 stores computer-executable instructions that, when executed by the processor 20, cause the assessment module 10 to function in a certain way. The assessment module 10 may also comprise a controller (not shown) configured to send instructions to the processor 20 for execution of said instructions.

The assessment module 10 comprises an enclosure or housing 16, which defines a cavity 14 inside. The mobile device 12 for assessment may be placed by a user at an assessment area 24 inside the enclosure. The assessment area 24 is a location inside the enclosure 16 that provides a suitable alignment of the mobile device 12 with various sensors at the assessment module for performance of the diagnostic tests by the assessment module. Placement of the mobile device 12 at the location of the assessment area 24 in the enclosure also ensures successful rotation of the mobile device 12 by a rotation mechanism in the assessment module, as discussed further below.

As mentioned above, the enclosure 16 houses a number of sensors that can be used in the diagnostic tests. The number and type of sensors may depend on the specific diagnostic tests to be carried out at a given assessment module.

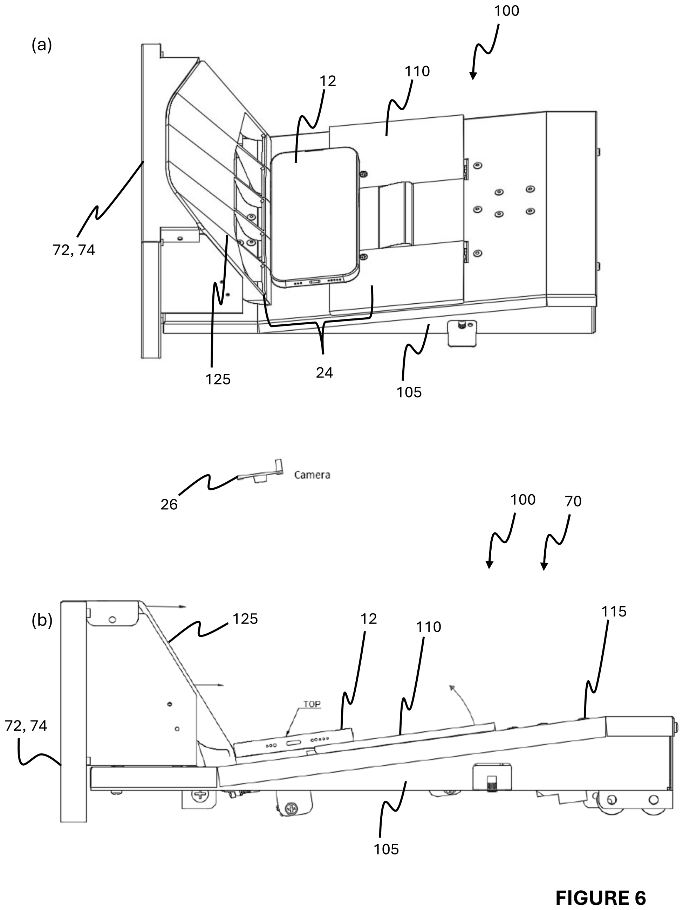

In particular, one type of sensor in the enclosure may be one or more camera 26 mounted inside the cavity 14. The one or more camera 26 may be arranged or directed so as to be able to capture images of the mobile device 12 in the assessment area 24. As an example, a suitable camera 26 is shown in FIGURES 6(b), 7, 9(b), 10(b) and 11(b), although more than one camera could be mounted at different locations within the cavity 14 of the enclosure 16 so as to image the mobile device 12 from various perspectives or directions. Use of the one or more camera 26 is described further below with respect to the performance of diagnostics tests.

Further sensors housed within the enclosure include a microphone 28 arranged to receive sound waves within the enclosure 16, and a global navigation satellite system (GNSS) signal receiver 30 for receiving a GNSS signal. Use of these sensors is described further below in respect of the performance of diagnostics tests.

The assessment module 10 may also comprise one or more peripherals, being hardware components controlled by the processor 20, or may comprise other non-computational elements, used in order to perform a diagnostic test. In FIGURE 1(a) a first peripheral is shown being a speaker 32 connected to the processor, which may be arranged to emit sound waves within the enclosure. A second peripheral is an illumination device 34 (for instance, an LED array) mounted inside the cavity 14 of the enclosure 16 to allow illumination of the cavity and any mobile device 12 therein. A further peripheral is one or more graphical object 36 mounted on an inside surface of the wall of the enclosure 16. The one or more graphical object 36 may be arranged so as to be within the field of view of a camera of a mobile device 12 located in the assessment area 24 of the enclosure 16. Use of each of the peripherals is described below in respect of the performance of diagnostics tests.

The assessment module may further comprise one or more antenna 38 for enabling various modes of data connection to the mobile device 12, including WiFi and Bluetooth transceivers.

FIGURE 1(b) illustrates a mobile device 12, which is an example of a mobile device (or wireless communication device) to be assessed within the assessment module. For example, the mobile device may be a mobile telephone or tablet computer. The mobile device is communicatively coupled to the assessment module via the data connection 18.

Although the mobile device 12 itself does not form part of the assessment module 10, FIGURE 1(b) is provided for completeness. In particular, it shows the mobile device 12 having a processor 42 and memory 44, whereby the memory 44 stores computer-executable instructions that, when executed by the processor 42, cause the mobile device 12 to function in a certain way. In particular, the processor 42 may be connected to a number of sensors at the mobile device 12. Said sensors include a touchscreen 46, a compass 48, a camera 50, a light level detector 52, an accelerometer 54, a gyroscope 56, a GNSS receiver 58, and a microphone 66. The processor 42 may further be connected to other components such as a vibration motor 60, a speaker 68, display screen 69 and an illumination device 62 (or camera flash) of the mobile device 12, as well as other sensors or components 64.

In some cases, a dedicated software application runs at the mobile device 12. Communications from the mobile device 12 to the assessment module 10 proceed through the application. The application can act to establish the initial data connection 18 from the mobile device 12 to the assessment module 10 and also to initiate certain diagnostic tests, including measurement at the various sensors or activation of the other components, as required to complete the diagnostic tests. An owner or user of the mobile device will download and install the software application (for instance, from the Apple AppStore or Google Play, depending on the operating system of their mobile device) prior to beginning assessment of the mobile device 12 and typically before connection to the assessment module 10.

In other cases, the user can access a diagnostic routine through a web browser at their mobile device 12. In much the same way as the software application, the web browser-based diagnostic routine can act to establish the initial data connection 18 from the mobile device 12 to the assessment module 10 and also to initiate certain diagnostic tests, including measurement at the various sensors or activation of the other components, as required to complete the diagnostic tests

In some cases, the software application or web browser-based diagnostic routine guides the user or owner of a mobile device 12 through an assessment process. In particular, the software application or web browser-based diagnostic routine may establish or initiate the data connection 18 between the mobile device 12 and the assessment module 10, and then may show instructions to the user at a screen of the mobile device, for instance, to instruct the user to interact with the mobile device in certain ways. The instructions may request the user to perform certain actions (for example, reorientation of the mobile device, or touching of certain areas of a touch screen or a fingerprint sensor). In this way, the mobile device 12 can collect outcomes of various diagnostic tests of certain functions of the device, which can then be sent to, or obtained by, the assessment module 10. The software application or web browser-based diagnostic routine may further instruct the user to place the mobile device 12 in the assessment area 24 of the assessment module 10 at an appropriate time, so that the assessment module 10 may perform diagnostic tests on the mobile device 12 independently of the user. Once the mobile device 12 has been placed inside the assessment module 10, the software application running at the processor 42 of the mobile device 12 may also be responsible for interacting with the assessment module 10 to initiate certain of the diagnostic tests, for instance by sending instructions or commands to proceed with certain steps of different of the diagnostic tests.

In use, the assessment module 10 first establishes the data connection 18 with the mobile device 12. This allows for exchange of data between the assessment module 10 and the mobile device 12. Said data may include the sending of instructions from the mobile device 12 to the assessment module 10, or vice versa, in order to carry out a diagnostic test. Said data may further include the outcomes of a diagnostic test (for instance, the measured value from a sensor at the mobile device 12, which is sent to the assessment module 10).

Next, the assessment module 10 obtains an outcome of one or more diagnostic test on the mobile device 12. The outcome may be obtained in two ways. A first option is that the outcome is received from the mobile device 12 via the data connection 18, wherein the outcome of the one or more diagnostic test is a measured value from a sensor at the mobile device 12 or is information retrieved from the mobile device 12. A second option is that the outcome is measured at the at least one sensor at the assessment module 10. More discussion of specific diagnostic tests is provided below.

After the results of the one or more diagnostic test has been gathered or collated by the assessment module 10, the assessment module 10 generates a report providing an evaluation of the mobile device 12 based on the results of the one or more diagnostic test. The report is output to a user of the assessment module 10. The report output by the assessment module 12 could be sent to a display screen (no shown in FIGURE 1) at the assessment module 10 and/or at the mobile device 12. Alternatively, the report may be sent to a printer or stored at a non-volatile memory in communication with the processor 20 of the assessment module 10, or stored at a 'cloud-based' storage 66.

The report provides an evaluation of the mobile device 12 based on the results of the one or more diagnostic test. The report may comprise a compilation of the outcomes of each diagnostic test. The report may summarise the results of each diagnostic test, or may provide the results of further analysis of those results. For instance, in some cases the assessment module 10 may be able to derive further information from the outcome of each diagnostic test. In some cases, the results will provide a grading of the condition of the mobile device 12. The grading may apply machine-learning or artificial intelligence (AI) techniques to improve the accuracy of any such grading. In some cases, the report may provide a suggested market value or trade-in value for the mobile device 12 based on the grading. In any case, the output of the assessment module 10 is a report giving information to the user on the performance and condition of the mobile device 12.

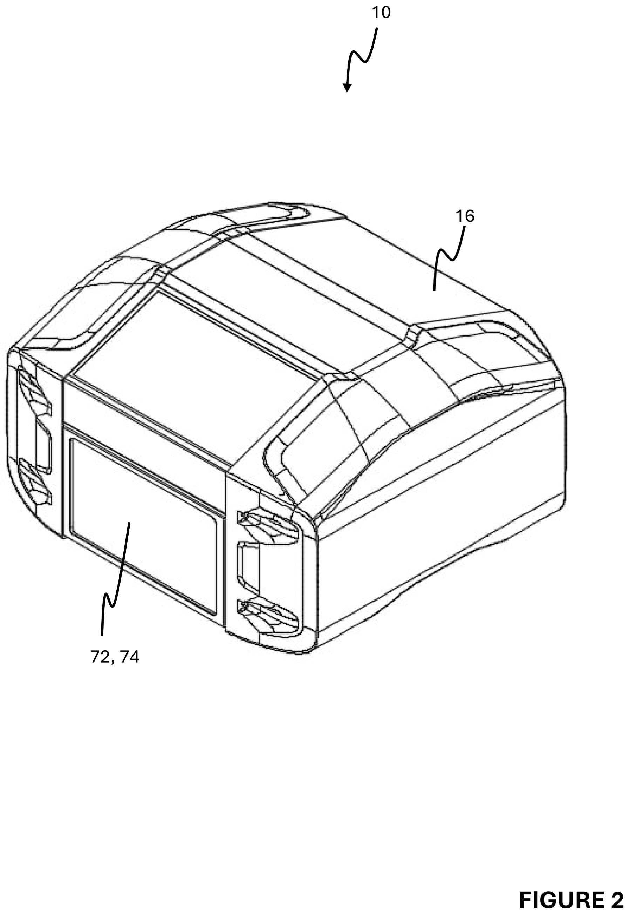

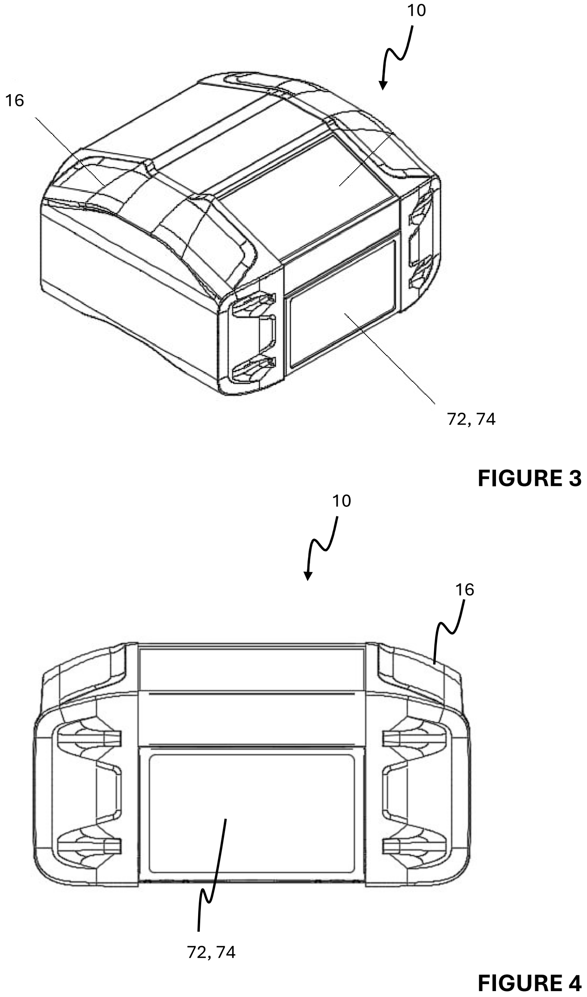

FIGURES 2, 3, 4 and 5 show different views of the outer surface of an assessment module 10. As discussed above, the assessment module comprises an enclosure or rigid housing 16, which defines and encloses a cavity 14 inside. A mobile device 12 can be placed inside the cavity 14 (specifically, located at an assessment area 24) to allow assessment of the mobile device 12. In particular, one or more diagnostic tests can be performed on the mobile device 12 within the enclosure 16. It will be understood that other diagnostic tests can be performed on the mobile device 12 when it is outside the enclosure, with the outcomes of those tests obtained by the assessment module 10, as discussed below.

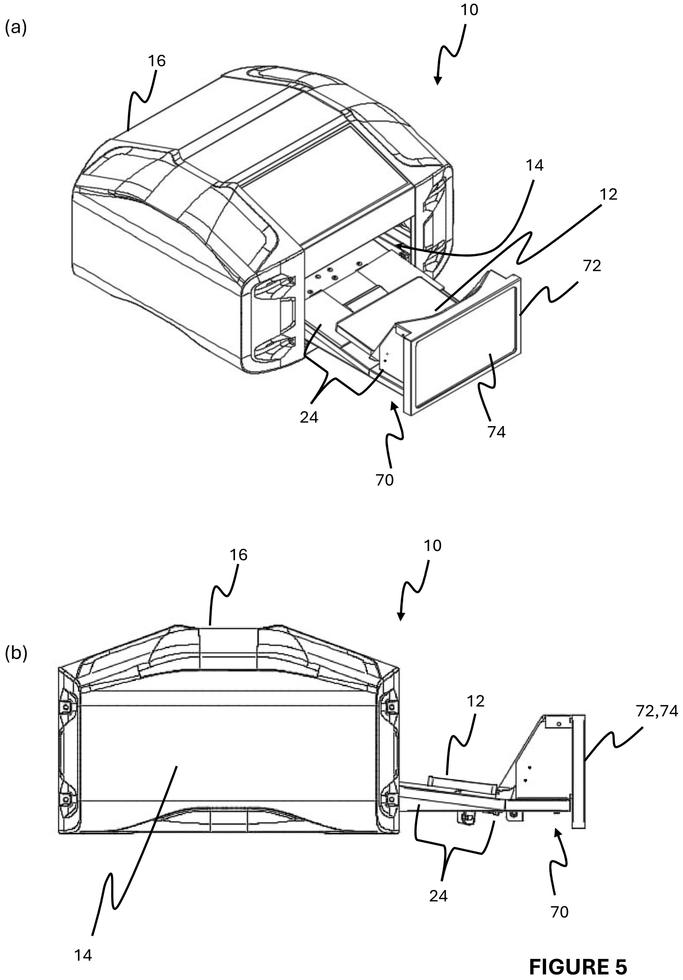

FIGURE 5 shows a view of the assessment module 10 with an opening or open door to the enclosure 16. FIGURE 5(a) shows a perspective view, and FIGURE 5(b) shows a cross-sectional view. The opening to the enclosure is provided by a slidable tray 70, which moves into and out of the cavity 14. An upright section 72 of the slidable tray provides a section of the wall of the enclosure 16 when the tray 70 is fully inserted inside the cavity 14. In the particular example of FIGURE 5, this upright section 72 of the slidable tray 70 also comprises the display 74 of the enclosure 16, which can be used to display the report generated by the assessment module 10 after obtaining the outcomes of the one or more diagnostic test. However, the skilled person will understand that this is not the only placement possible for the display 74 on the outer wall of the assessment module. The display 74 may comprise a touchscreen for interaction with the assessment module 10 by the user, including entering inputs and commands.

The assessment area 24, being the location in the assessment module 10 at which the mobile device 12 is appropriately aligned for performance of various of the diagnostic tests, is arranged on the upper surface of the slidable tray 70. To insert a mobile device 12 to be tested or assessed into the assessment module 10, a user pulls out, or slides out, the slidable tray 70 from the rest of the body of the enclosure 16. The mobile device 12 can then be placed in the assessment area 24 to be arranged on the upper surface of the slidable tray 70. In this way, the mobile device 12 is supported by a platform at the base of the slidable tray 70. The slidable tray 70 is then pushed into, or slid into, the enclosure 16 until the upright section 72 of the slidable tray 70 couples with the rest of the walls of the enclosure 16. The enclosure 16 is then closed, so that the cavity 14 inside (and the mobile device 12 for assessment) is enclosed by the walls of the enclosure 16.

Mounted on other walls of the enclosure 16 (although not shown in the figures) are input and output interfaces for connecting power, an Ethernet cable, and USB connector.

### Performance of diagnostic tests

One or more diagnostic tests can be performed on a mobile device 12 to be assessed. The outcomes to those diagnostic tests are obtained by the assessment module 10. The diagnostic tests are performed either by interaction between the mobile device 12 and the assessment module 10, or by performance of tests on the mobile device 12 by the assessment module. In order to perform diagnostic tests by interaction between the mobile device 12 and the assessment module 10, in some examples a software application may be downloaded, installed and run at the mobile device 12. The software application may initiate tests or measurements of a particular function at the mobile device, and then send the results of these tests to the assessment module 10. Alternatively, a web browser-based diagnostic routine may be accessed by a user of the mobile device 12, which similarly initiates tests or measurements of a particular function at the mobile device 12, and then send the results of these tests to the assessment module 10. In other cases, data exchange between the mobile device 12 and the assessment module 10 does not depend on a software-application or a web browser-based diagnostic routine.

A large number of different diagnostic tests can be performed on the mobile device 12, with the results obtained by the assessment module 10. In different implementations of the assessment module 10, different numbers and different combinations of diagnostics tests can be performed. The tests, and the order and flow of the tests, can be adapted by the user of the assessment module 10 to meet their own commercial needs. Various possible tests are discussed below, although it will be understood that other tests could be performed by the assessment module 10, and not all the tests described will always be performed on any given mobile device 12.

Benefits are obtained by performance of a group of different diagnostic tests on a given mobile device 12. In particular, obtaining of the outcome of a larger number of diagnostic tests provides a more complete and reliable assessment of the overall condition of the mobile device 12. This is particularly important where the assessment is used to place a value on the mobile device 12 for resale or trade-in. In some circumstances, three or more, five or more, eight or more, ten or more, or all of the diagnostic tests from a group comprising the different diagnostic tests below could be performed on a given mobile device 12 being assessed.

### • Testing of the microphone at the mobile device

A diagnostic test to obtain information on the performance of the microphone 66 at the mobile device 12 may be performed (checking all microphones and recording quality). As described above, a speaker 32 is mounted within the cavity 14 defined by the enclosure 16 of the assessment module 10. The speaker 32 is arranged to emit sound waves within the enclosure 16.

To perform the diagnostic test, the assessment module 10 receives an instruction from the mobile device 12 to emit an audio transmission via the speaker 32 mounted inside the enclosure 16 of the assessment module 10. The instruction may be from the software application at the mobile device 12, which initiates this particular diagnostic test.

The assessment module 10 then emits an audio transmission via the speaker 32. The audio transmission may be a predefined, pre-recorded audio file, for instance stored at and retrieved from the memory 22 of the assessment module. The audio transmission may include a range of audio frequencies and amplitudes (volumes), and may include speech or non-speech audio.

The audio transmission can be received and recorded at the mobile device 12, in particular after having been received via a microphone 66 of the mobile device 12. In some cases, the recording of the audio transmission may be controlled by the software application at the mobile device 12. The recording of the audio transmission is then sent to the assessment module 10 via the established data connection 18.

Once the recording of the audio transmission is received at the assessment module 10, then the assessment module 10 can perform audio analysis on the recording. The audio analysis provides an indication of the performance or functionality of the microphone 66 at the mobile device 12. The audio analysis looks to evaluate the ability of the microphone 66 to sense or receive the audio signals at different frequencies and volumes.

In a first example of the audio analysis performed by the assessment module 10, the assessment module 10 compares the frequency spectrum of the known, predefined audio transmission emitted at the speaker 32 of the assessment module 10 with the frequency spectrum of the audio transmission recorded at the mobile device 12. For instance, the comparison uses frequency composition analysis via a Fourier transform, comparing the frequency spectrum of the recorded audio transmission to that of the original audio transmission emitted by the assessment module 10. A measure of similarity between the two frequency spectra (for instance, the degree of deviation in the recorded audio transmission from the originally broadcast audio transmission) can then be determined. The higher the level of similarity, then the better the performance of the microphone 66 - and the connected audio circuit - at the mobile device 12 is deemed to be.

In a second example of the audio analysis performed by the assessment module 10, the audio transmission as emitted at the speaker 32 of the assessment module 10 is a speech audio file (in other words, a recording of a spoken word). Here, a measure of similarity can be determined between the speech audio transmission that was emitted from the speaker 32 at the assessment module 10 and the speech audio transmission recorded at the mobile device. In particular, the speech audio file emitted through the speaker 32 of the assessment module and recorded by the mobile device via the microphone 66 is evaluated by a built-in neural network trained to recognize the original signal. As before, the higher the level of similarity, then the better the performance of the microphone 66 at the mobile device 12.

It will be understood that this diagnostic test will be performed on the mobile device 12 enclosed inside the assessment module 10, because it allows the test to be performed in ideal conditions (i.e. minimising external noise interference).

### • Testing the speaker at the mobile device

A diagnostic test to obtain information on the performance of the speaker 68 at the mobile device 12 may be performed (checking the functionality of all speakers and sound quality). As discussed above, a microphone 28 is mounted within the cavity 14 defined by the enclosure 16 of the assessment module 10. The microphone 28 is arranged to receive sound waves emitted within the enclosure 16.

To perform the diagnostic test, the assessment module 10 receives an instruction from the mobile device 12 to begin recording an audio broadcast received at the microphone 28 of the assessment module 10. In some cases, the instruction may be from the software application at the mobile device 12, which initiates this particular diagnostic test, via the established data connection 18.

The mobile device 12 emits the audio broadcast from a speaker 68 at the mobile device 12. The audio broadcast is a pre-defined and pre-recorded audio file, which may have been retrieved by the mobile device 12 from the memory 44 in communication with the processor of the mobile device, through the software application, or received from the assessment module 10 via the data connection 18. The pre-defined and pre-recorded audio file comprises audio at a range of frequencies and volumes.

The assessment module 10 records the audio broadcast as received via the microphone 28 of the assessment module 10. The assessment module 10 then performs audio analysis of the recorded audio broadcast. The audio analysis provides an indication of the performance or functionality of the speaker 68 at the mobile device 12, especially its ability to broadcast accurately a range of audio frequencies and volumes.

In a first example of the audio analysis performed by the assessment module 10, the assessment module 10 compares the known frequency spectrum of the audio broadcast as emitted at the speaker 68 of the mobile device 12 with the frequency spectrum of the audio broadcast recorded at the assessment module 10. A measure of similarity between the two frequency spectrums (for instance, the degree of deviation in the audio broadcast from the mobile device 12 and the audio broadcast recorded at the assessment module 10) can then be determined. The higher the level of similarity, then the better the performance of the speaker 68 at the mobile device 12.

In a second example of the audio analysis performed by the assessment module 10 the audio broadcast emitted at the speaker 68 of the mobile device 12 is a speech audio file (in other words, a recording of a spoken word). Here, a measure of similarity can be determined between the original speech audio broadcast as emitted from the speaker 68 at the mobile device and the speech audio broadcast that was recorded via the microphone 28 of the assessment module. Once again, the similarity can be evaluated by a neural network trained to recognize the original signal. As before, the higher the level of similarity, then the better the performance of the speaker 68 at the mobile device 12.

It will be understood that this diagnostic test will be performed on the mobile device 12 enclosed inside the enclosure 16 of the assessment module 10, because it allows the test to be performed in ideal conditions (i.e. minimising external noise interference).

### • Assessing the cosmetic condition of the mobile device

The cosmetic condition of the mobile device 12 can be evaluated. For example, the surfaces of the casing and screen of the mobile device 12 under assessment can be scrutinised and evaluated to identify any scratches, dents or defects.

To perform this diagnostic test, at least one camera 26 is mounted inside the cavity 14 defined by the enclosure 16 of the assessment module 10. The at least one camera 26 is arranged to be directed toward a mobile device 12 at the assessment area 24 of the enclosure 16. Ideally, a plurality of cameras is used, in order to obtain more than one image of the mobile device 12 from a plurality of directions. In this way, different surfaces of the mobile device 12 may be imaged, or the same surface at different angles.

In a particular example, a plurality of cameras can be mounted inside the enclosure, to obtain images of the mobile device 12 from, for instance, six separate angles (front, back, left side, right side, bottom, and top). As discussed further below, whilst it is housed inside the enclosure 16 the mobile device 12 may be rotated by a rotation mechanism, and the rotation of the mobile device 12 relative to the fixed position of the one or more camera 26 allows various different aspects and surfaces of the mobile device 12 to be imaged during the period of rotation.

The at least one camera 26 at the assessment module 10 is used to obtain one or more image of the surface of the mobile device 12 opposing the camera. The assessment module may then assess the cosmetic condition of the mobile device 12 based on the one or more image. **In** particular, any scratch, dent or other imperfection at a surface of the mobile device 12 can be identified and the extent of any damage detected.

In some cases, a specially trained neural network is used to analyse the one or more images obtained by the camera 26 in the assessment module. In particular, the neural network may a) determine the appearance index (grade) of the mobile device 12 based on any damage, scratches, dirt, or dents on the body and screen identified; and/or b) detect and highlight on the original images displayed to a user those areas of the surface of the mobile device 12 where the aforementioned damage is present.

Any identified imperfections may then be listed in the report generated by the assessment module 10. **In** some cases, the images, together with an indication or highlighting of the location of any damage or effects, may themselves be included in the report. In some cases, the number and severity of the imperfections may be determined by the assessment module 10 in order to grade the cosmetic condition of the mobile device 12. This grade can then be included in the report.

### • Testing the display screen at the mobile device

A diagnostic test to obtain information on the performance of the display screen 69 at the mobile device 12 can be performed. In other words, a diagnostic test can be performed to identify if the display screen 69 works correctly across all areas and regions of the display (including checking for liquid crystal display (LCD) defects, brightness levels, and screen burn).

To perform the diagnostic test, the assessment module 10 receives an instruction from the mobile device 12 to obtain one or more images of the display screen 69 of the mobile device 12 during a subsequent period during which the display screen 69 of the mobile device 12 is illuminated. Specifically, the mobile device 12 illuminates the display screen 69 of the mobile device 12 to show an image that may include patterns of various changes in colour contrast, or which may be a homogenous colour and brightness spectrum. The one or more cameras 26 at the assessment module 10 then obtains or takes at least one image of the illuminated display screen 69. In some cases, multiple images of the display screen 69 may be obtained by the one or more camera 26 of the assessment module 10, with each of the multiple images taken of a different displayed image at the mobile device12.

Once the assessment module 10 has obtained the one or more images of the illuminated display screen 69, then the assessment module 10 performs analysis of the images in order to obtain information on the performance of the display screen 69. In particular, the analysis may identify areas of the display screen 69, or pixels in the display screen 69, that are non-functional or poorly performing (for example, exhibiting poor performance across the colour spectrum, or lower than expected light levels).

### • Testing the camera at the mobile device

A diagnostic test to obtain information on the performance of the at least one camera 50 at the mobile device 12 may be performed. In other words, a diagnostic test can be performed to check that the one or more camera 50 at the mobile device 12 functions correctly, and/or to assess the quality of the images that it obtains. The performance of seperate 'front' and 'rear' cameras at the mobile device 12 can be assessed using the describe test (including checking the functionality of all cameras, autofocus, telephoto, TrueDepth, ultra-wide, Face ID), in particular in conjunction with the rotation of the mobile device 12 by the rotation mechanism, as discussed below.

In order to perform this diagnostic test, the assessment module 10 comprises one or more graphical object 36 arranged inside the enclosure. In particular, the graphical object 36 is an image, picture or symbol that is arranged at or mounted on an inner surface of the enclosure 16, so as to be opposite to the outward facing surface of a mobile device 12 placed in the assessment area 24 within the cavity 14 of the enclosure 16 (when the enclosure is closed). The graphical object 36 may include an intricate pattern in black and white (such as a quick response (OR) code), or an image comparing three or more colours (such as a colour wheel), for instance. More than one graphical object 36 may be arranged on a surface inside the enclosure 16, in order to test different aspects of the one or more camera 50 of the mobile device, as discussed below.

To perform the diagnostic test, the camera 50 of the mobile device 12 obtains one or more image of the graphical object 36 arranged inside the cavity 14 of the assessment module 10. The assessment module 10 then receives the one or more image from the mobile device 12. In some cases, the assessment module 10 illuminates the cavity 14 inside the enclosure 16 prior to the images being obtained by the camera 50 of the mobile device. For instance, the illumination may be provided by switching on of an LED array 34 mounted inside the enclosure 16.

The assessment module 10 performs analysis on the one or more image of the graphical object 36 received form the mobile device 12. The analysis looks to determine the quality of the images obtained by the camera 50 at the mobile device 12. The specific nature of the analysis depends on the particular graphical object 36 imaged, as discussed below.

In one example, one of the one or more graphical object 36 is a QR code. The assessment module 10 analyses the images of the QR code received from the mobile device 12 in order to determine the performance of the auto-focus function of the camera 50 at the mobile device 12. A summary of the determined performance of the auto-focus function may be included within the generated report.

In a further example, one of the one or more graphical object 36 is a graphical object or image comprising at least three colours. The assessment module 10 performs analysis of the at least one image of the one or more graphical object 36 to analyse the colour accuracy of the at least three colours. A summary of the determined colour accuracy may be included within the generated report.

It will be understood that the graphical object 36 may combine features suitable for both testing the performance of the auto-focus function of the camera 50 at the mobile device, and for testing the colour accuracy of the camera 50 at the mobile device. Alternatively, there may be two separate graphical objects 36 arranged on the inner surface of the enclosure 16 of the assessment module 10, and images of both graphical objects 36 could be obtained by the mobile device 12 and sent to the assessment module 10 for analysis.

It will be understood that the mobile device 12 may have one or more cameras 50. For instance, the mobile device 12 may have a 'front' camera, on the same surface as the display screen, as well as a 'back' camera on a surface opposite the display screen. The described diagnostic test could be performed in relation to any or all cameras at the mobile device. The camera to be tested should be arranged opposite the graphical object 36. Therefore, in some examples a first camera at the mobile device 12 may be tested before rotation of the mobile device by the below-described rotation mechanism, and a second camera on the mobile device 12 (on the opposite surface than the first camera) may be tested after rotation of the mobile device.

### • Further diagnostic tests

A number of other diagnostic tests may be performed on the mobile device 12 including but not limited to:
1. Identifying the presence or absence of a SIM or eSIM - Involves receiving at the assessment module 10 from the mobile device 12 an indication of the presence or absence of a physical or embedded SIM within the mobile device. The assessment module 10 may further receive the results of a performance test for the ability of an identified physical or embedded SIM to connect to a telecommunications network. This test looks to test the connectivity functions of the mobile device 12.
2. Testing the GNSS receiver - Involves receiving a geolocation signal from a global navigation satellite system (GNSS) receiver 58 at the mobile device 12. The geolocation signal may be a location of the mobile device 12 (longitude and latitude, for instance) as measured by the mobile device using the GNSS signal. The assessment module 10 may then compare the location identified by the mobile device 12 with a predetermined geographical location of the assessment module 10. This diagnostic test looks to assess the performance and accuracy of the GNSS receiver 58 at the mobile device.
3. Testing the Bluetooth capability - Involves establishing a Bluetooth connection between the assessment module 10 and the mobile device 12. This looks to determine functionality of Bluetooth capability at the mobile device 12. In other words, the assessment module 10 may try to establish a Bluetooth connection, and may exchange a test communication if that connection is established. Whether or not the Bluetooth connection is successfully established may be included within the generated report. In some cases, the data connection 18 between mobile device 12 and the assessment module 10 that is used to exchange data in order to perform the diagnostic tests could be a Bluetooth connection. However, alternatively, the Bluetooth connection may only be established as part of a diagnostic test.
4. Testing the WiFi capability - Involves establishing a WiFi connection between the assessment module 10 and the mobile device 12. This looks to determine functionality of WiFi capability at the mobile device 12. In other words, the assessment module 10 may try to establish a WiFi connection, and may exchange a test communication. Whether or not the WiFi connection is successfully established may be included within the generated report. The ability of the mobile device 12 to provide a WiFi hotspot to other devices (i.e. the assessment module 10 in a test scenario) may also be tested. In some cases, the data connection 18 between mobile device 12 and the assessment module 10 used to exchange data in order to perform the diagnostic tests could be a WiFi connection (for instance, connected to a WiFi hotspot generated by the assessment module 10). However, alternatively, the WiFi connection may only be established as part of a diagnostic test.
5. Assessing the battery health - Involves receiving at the assessment module 10 from the mobile device 12 an assessment of the health of the battery of the mobile device 12. In other words, the mobile device 12 may perform a self-assessment of its battery health, and provide the outcome of this self-assessment to the assessment module 10. All or parts of the self-assessment may be included in the subsequently generated report.
6. Identifying non-original components - Involves receiving at the assessment module 10 from the mobile device 12 an identification of the presence of any non-original components within the mobile device 12. The mobile device 12 may be able to scan or assess its internal components (e.g. hardware components). Any non-original components (and their origin as manufacture authorised or non-manufacturer authorised components) may be identified to the assessment module 10 from the mobile device 12.
7. Identifying the IMEI - Involves receiving at the assessment module 10 from the mobile device 12 the International Mobile Equipment Identity (IMEI) of the mobile device under assessment. From the IMEI, the assessment module 10 is able to determine the expected make, model, colour, and memory capacity of the tested mobile device 12.
8. Testing the vibration motor - Involves receiving at the assessment module 10 from the mobile device 12 an instruction to initiate a recording via the microphone 28 of the assessment module 10 during a subsequent period of activation of a vibration motor 60 at the mobile device 12. This diagnostic test looks to establish that the vibration motor 60 can be activated on command. The mobile device 12 may activate the vibration motor 60 and, where the vibration module 60 is successfully activated at the mobile device 12, then sound will be recorded by the assessment module 10 via the microphone 28 at the enclosure 16 of the assessment module 10. Thus, the assessment module 10 is able to determine the activation or otherwise of the vibration motor 60 at the mobile device 12 by analysis of the recording at the microphone 28 during a period of activation of a vibration motor 60 at the mobile device 12.
9. Testing the camera flash - Involves receiving at the assessment module 10 from the mobile device 12 an instruction to initiate obtaining of one or more image from the one or more cameras 26 at the enclosure 16 of the assessment module 10 during illumination of a camera flash 62 at the mobile device 12. In this way, the assessment module 10 can establish that the camera flash 62 at the mobile device 12 operates as expected.
10. Testing the light sensor or light level detector - Involves receiving at the assessment module 10 from the mobile device 12 a measurement of a light level at a light level sensor 52 at the mobile device 12. In some cases, the mobile device 12 may measure a light level or light intensity at the mobile device 12 prior to the mobile device being placed inside the enclosure 16 of the assessment module 10. The mobile device 12 may measure the light intensity or light level at a light level detector 52 and return this measured value to the assessment module 10, in order for the assessment module 10 to determine the performance of the light sensor 52 at the mobile device 12.
   In an alternative, this diagnostic test occurs when the mobile device 12 is inside the enclosure of the assessment module 10, and the diagnostic test further comprises the assessment module 10 illuminating one or more illumination device 34 (being an LED array or bulb, for instance) within the enclosure 16 of the assessment module 10 prior to the measurement of the light level at the mobile device 12. The mobile device 12 within the enclosure 16 may then measure the light intensity or light level at the light level sensor 52. The measured light level or intensity can be obtained by the assessment module 10, and compared to an expected light level or intensity in view of the level of illumination by illumination devices 34 at the assessment module 10. In this example, the light level emitted by the illumination device 34 in the enclosure 16 may be varied with time, and the assessment module 10 may establish that the light level sensor 52 correctly senses this variation.
11. Testing the gyroscope - Involves receiving at the assessment module 10 from the mobile device 12 a measurement of an orientation and/or angular velocity by a gyroscope 56 at the mobile device 12. This diagnostic test allows the assessment module 10 to ensure that the gyroscope 56 at the mobile device 12 is properly functioning. This diagnostic test may take place before the mobile device 12 is arranged inside the enclosure 16 of the assessment module 10 (although after a data connection between the mobile device 12 and the assessment module 10 has been established), in which case the user may be instructed to move the mobile device 12 in certain ways according to instructions from the software application at the mobile device 12 or the web browser-based diagnostic routine. In this way, changes in orientation and angular velocity of the mobile device 12 can be generated by the user in order to allow appropriate measurements at the gyroscope 56 of the mobile device 12.
12. Testing the compass - Involves receiving at the assessment module 10 from the mobile device 12 a measurement of a bearing of the mobile device 12 from a compass 48 at the mobile device 12. This diagnostic test allows the assessment module 10 to ensure that the compass 48 at the mobile device 12 is properly functioning. This diagnostic test may take place before the mobile device 12 is arranged inside the enclosure 16 of the assessment module 10 (although after an data connection 18 between the mobile device 12 and the assessment module 10 has been established), in which case the user may be instructed to move the mobile device 12 in certain ways according to instructions from the software application at the mobile device 12 or the web browser-based diagnostic routine. In this way changes in orientation of the mobile device 12 may be made by the user in order to allow appropriate measurements at the compass 48 of the mobile device.
13. Testing the accelerometer - Involves receiving at the assessment module 10 from the mobile device 12 a measurement of an acceleration of the mobile device at an accelerometer 54 at the mobile device 12. This diagnostic test allows the assessment module 10 to ensure that the accelerometer 54 at the mobile device 12 is properly functioning. This diagnostic test may take place before the mobile device 12 is arranged inside the enclosure 16 of the assessment module 10 (although after a data connection 18 between the mobile device 12 and the assessment module 10 has been established), in which case the user may be instructed to move the mobile device 12 in certain ways (e.g. shake the device) according to instructions from the software application at the mobile device 12 or the web browser-based diagnostic routine.
14. Testing the barometer - Involves receiving at the assessment module 10 from the mobile device 12 a measurement of an air pressure at a barometer at the mobile device 12. This diagnostic test allows the assessment module 10 to ensure that the barometer at the mobile device is properly functioning.
15. Testing the touch screen - Involves receiving at the assessment module 10 from the mobile device 12 a measurement of one or more touch interactions received at the different areas of the touchscreen 46 of the mobile device 12 (which may also be the display screen 69), in response to instructions issued to a user of the mobile device 12 to provide touch inputs at different areas of the touchscreen 46. This diagnostic test allows the assessment module 10 to ensure that the touchscreen 46 at the mobile device 12 is properly functioning (including touch response on all display points, multitouch, 3D Touch, Touch ID).
   In one example, the software application on the mobile device 12 or the web browser-based diagnostic routine may 'lead' the user through a series of interactions, in which they request that the user touches different areas of the touchscreen 46. The mobile device 12 may then obtain a measurement of the touch response at each area of the touchscreen 46 at the mobile device 12, which can be sent to or obtained by the assessment module 10. Given that the touch response recorded at the mobile device 12 should follow a predetermined sequence according to the instructions provided to the user, then the results obtained by the assessment module 10 can be used to determine if each area of the touchscreen 46 (and the touch sensors therein) are responding as expected. As such, the assessment module 10 can determine the performance of the touchscreen 46 at the mobile device 12.
16. Testing button function - Involves receiving at the assessment module 10 from the mobile device 12 an indication of the depression of one or more button at the mobile device12 by the user, in response to instructions issued to a user of the mobile device 12 to depress the same (via the software application on the mobile device or the web browser-based diagnostic routine). This diagnostic test allows the assessment module 10 to ensure that any physical buttons at the device are properly functioning.
17. Testing other functions and sensors - Involves receiving at the assessment module 10 from the mobile device 12 a measurement from one or more further sensors or functions at the mobile device 12, in response to instructions issued to a user of the mobile device 12 to provide or enable suitable inputs to the sensor or functions (for example, said input being guided by the software application on the mobile device or the web browser-based diagnostic routine). These sensors may include a proximity sensor, near-field communication (NFC) transceiver, Apple Pay capability, or QuickCharge capability. These diagnostic tests allows the assessment module 10 to ensure that various other functions at the mobile device 12 are properly functioning.

### The rotation mechanism

As discussed briefly above, certain of the diagnostic tests benefit from rotation of the mobile device 12 within the assessment module 10. In particular, rotation of the mobile device 12 allows a plurality of images to be taken of the mobile device 12 by the one or more camera 26 within the assessment module 10, each of the images being take of a different aspect, angle or surface of the mobile device 26. In particular, it is beneficial that each of the plurality of images is obtained at a different stage of rotation of the mobile device 12, in order to better observe scratches or defects at the surfaces of the mobile device 12.

It may also be advantageous to enable rotation of the mobile device 12 in order to test both the 'front' and 'back' cameras 50 at the mobile device 12. This requires rotation of the mobile device 12 so that both the front and back cameras 50 are arranged to be opposite the graphical object 36 used to test the cameras 50 at the mobile device 12, as described above.

A mechanism for rotation at the mobile device 12 requires controlled rotation, so that the mobile device 12 does not incur any sudden drops or unsupported movements that could cause damage. Moreover, the rotation mechanism must be able to operate in conjunction with mobile devices of different shapes and size. The inventors in the present case have developed a rotation mechanism in order to achieve these aims.

FIGURES 6 to 12 illustrate different stages in the rotation of a mobile device 12 inside the assessment module 10 using a rotation mechanism 100. The rotation mechanism 100 has a base plate or base portion 105, being the lower or supporting section of the slidable tray 70 of the enclosure 16 as discussed above. The base portion 105 has a fixed orientation compared to the walls of the enclosure 16.

The rotation mechanism 100 further comprises a flat support plate 110. The flat support plate 110 can be moved between a first position parallel to an upper surface 115 of the base portion 105 and a second position at an angle to the upper surface 115 of the base portion 105. The movement of the flat support plate 110 is actuated by an actuation element or moveable arm 120. A first end of the actuation element 120 is hingedly connected to a connector at the flat support plate 110, and a second end of the actuation element 120 is hingedly connected to the base portion 105.

The rotation mechanism 100 also comprises a concave support plate 125, which is arranged at a fixed angle to the upper surface 115 of the base portion 105. The concave support plate 125 is for receiving the mobile device 12 during rotation, as described below.

In a first stage of the rotation (shown in FIGURE 6, where FIGURE 6(a) is a perspective view, and FIGURE 6(b) is a cross-sectional view), the mobile device 12 is arranged by a user or operator of the assessment module 10 on the platform of the slidable tray 70 (i.e. in the assessment area 24). The mobile device 12 is at least partly supported by the flat support plate 110. In the example shown, the mobile device 12 has its display screen side (first face) facing outwardly into the open cavity of the assessment module 12. A camera 26 (which may be one of a plurality of cameras, as discussed above) is arranged directly overhead from the mobile device 12 located in the assessment area 24.

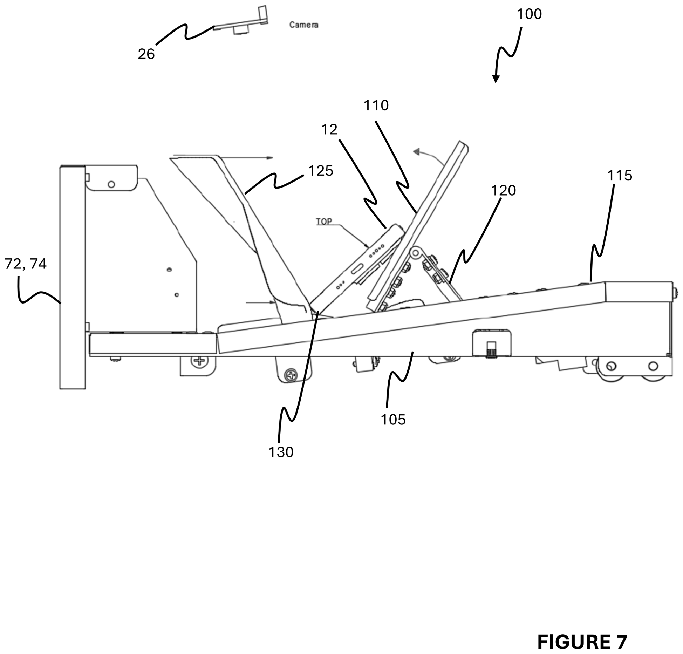

FIGURE 7 shows a cross-sectional view of the rotation mechanism 100 during a second stage of rotation. As illustrated, rotation of the actuation element 120 relative to the base portion 105 causes the flat support plate 110 to pivot relative to the second end of the actuation element 120. This results in the tilting of the flat support plate 110 compared to its first position (parallel to the upper surface 115 of the base portion 105), so that it is in a second position (at an angle to the upper surface 115 of the base portion 105). As a consequence, the mobile device 12 is caused to pivot about one of its edges 130, so as to rotate or tip the mobile device 12 relative to the upper surface 115 of the base portion 105.

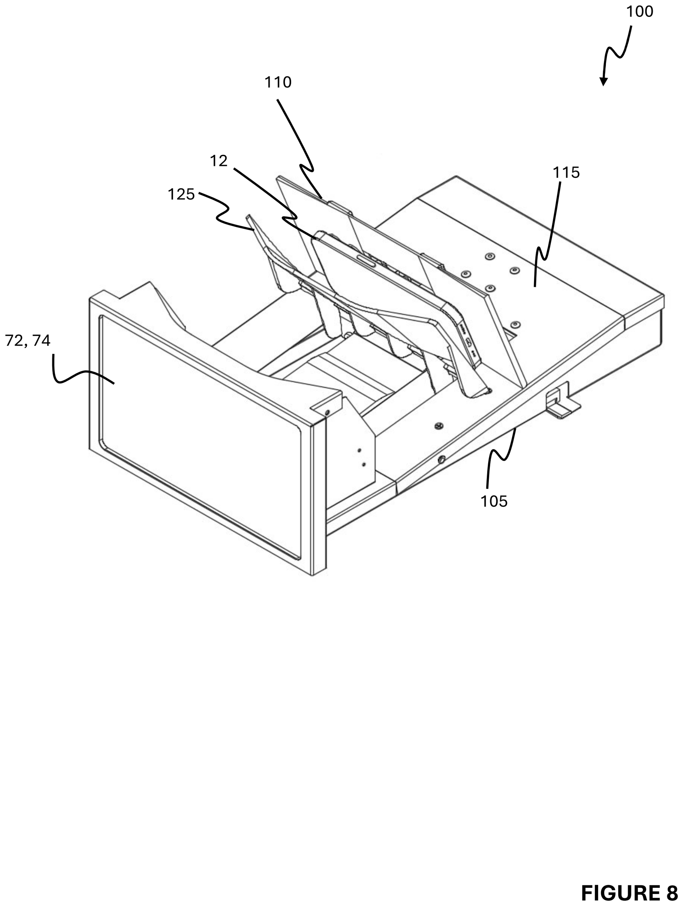

The actuation element 120 continues to be rotated in a controlled manner until the flat support plate 110 has rotated to a position around 90° relative to its starting position. Simultaneously, the concave support plate 125 is moved in a linear manner towards the flat support plate 110, so as to push the mobile device 12 (and specifically the edge 130 of the mobile device 12 about which it is pivoting) towards the flat support plate 110. This ensures that the mobile device 12 is fully supported by the flat support plate 110 during this stage of rotation (see FIGURE 8).

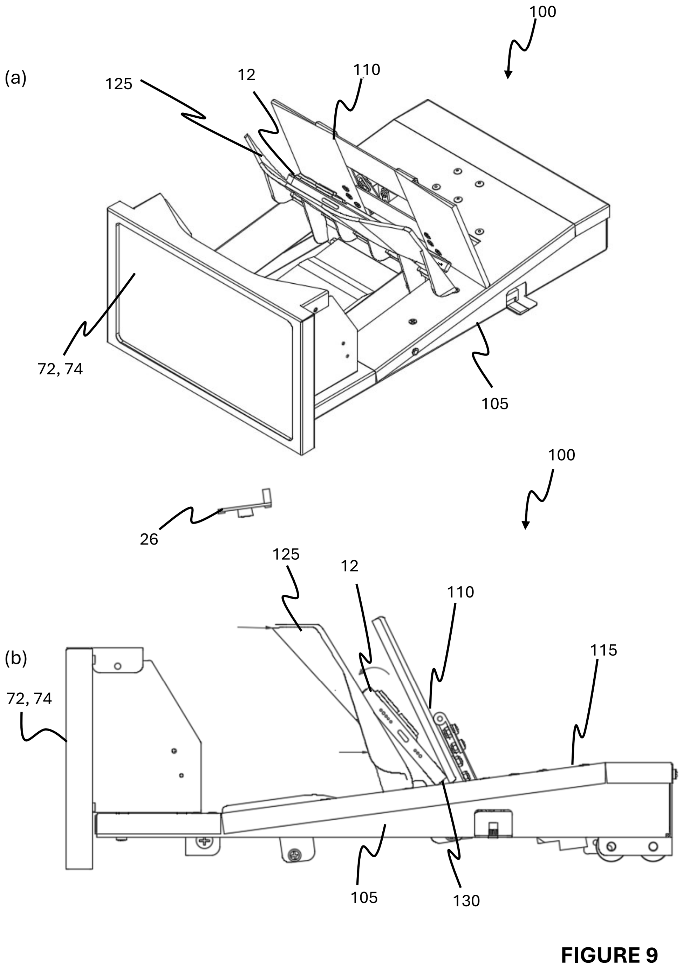

The rotation of the flat support plate 110 continues until the flat support plate 110 has been rotated to an angle greater than 90° relative to its starting position. At this point, the mobile device 12 tips or pivots on its edge 130 towards the concave support plate 125 and away from the flat support plate 110. As such, the mobile device 12 in this position has been rotated more than 90 degrees about the one edge 130 of the mobile device 12 compared to its starting position. As the concave support plate 125 has moved toward the flat support plate 110, the concave support plate 125 receives the mobile device 12, and is now supporting the mobile device 12. This is illustrated in FIGURE 9 (where FIGURE 9(a) is a perspective view, and FIGURE 9(b) is a cross-sectional view).

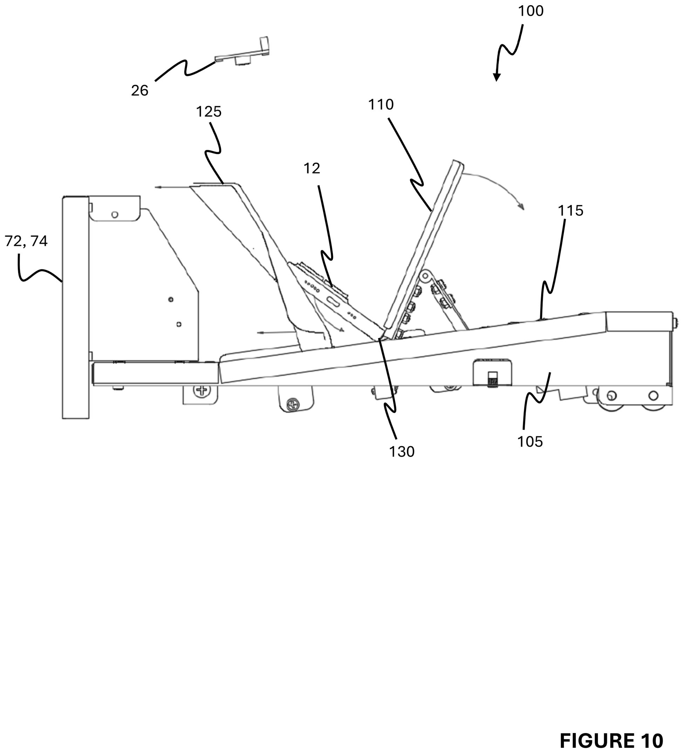

Next, the concave support plate 125 is moved away from the flat support plate 110, to increase the separation between the concave support plate 125 and the flat support plate 110 (see FIGURE 10). This causes the mobile device 12 to further pivot around its one edge 130. The face of the mobile device 12 that was initially facing outwards to the cavity 14 of the enclosure 16 of the assessment module 10 is now facing towards the upper surface 115 of the base portion 105, whilst the opposite face is now facing outwardly into the cavity 14 (and toward the camera 26 mounted above).

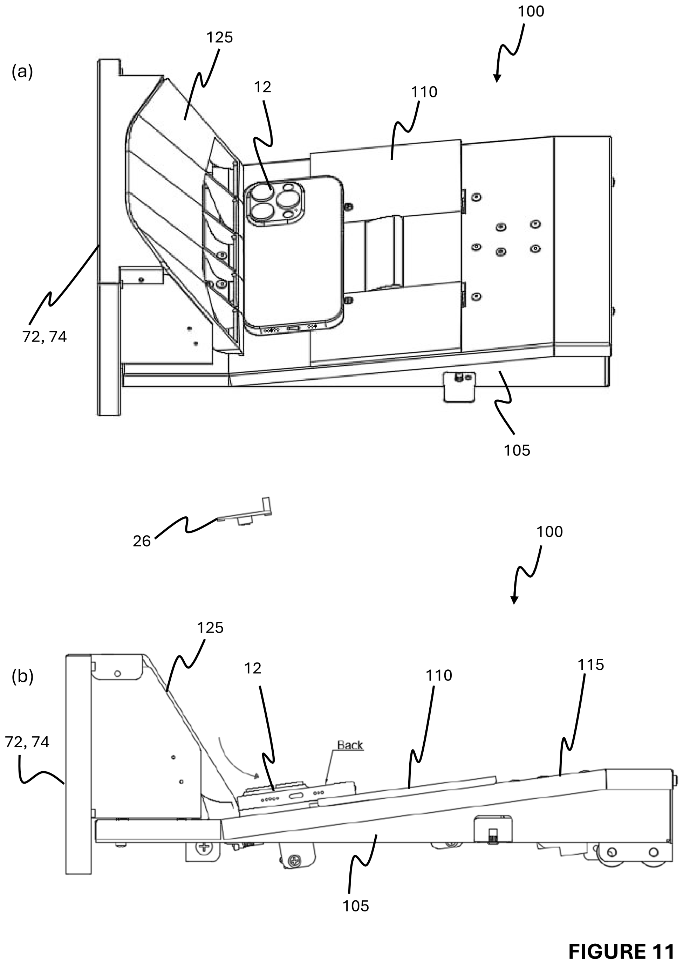

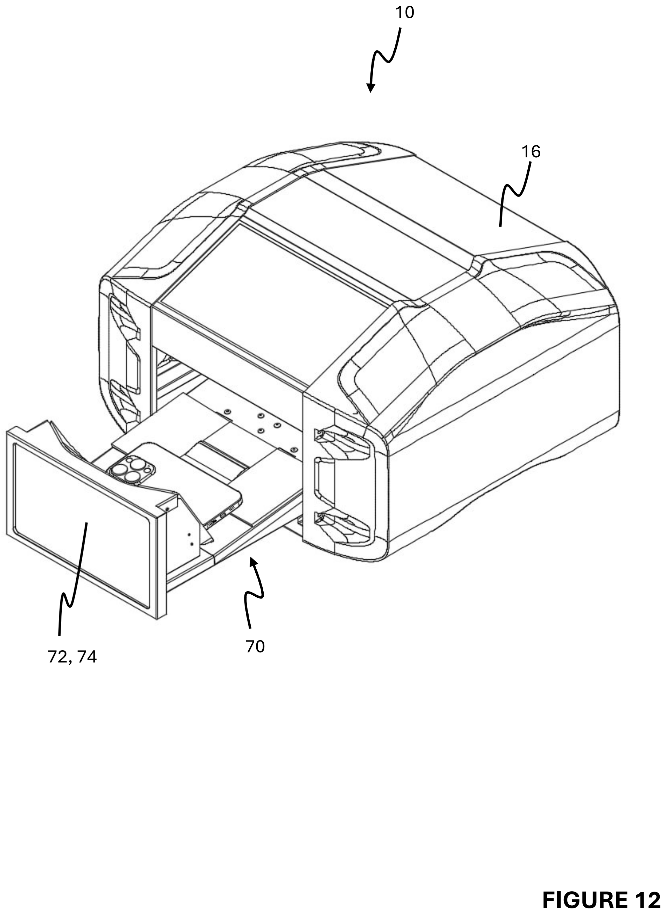

Finally, the concave support plate 125 moves back to its original position, and the flat support plate 110 is rotated back to its original position parallel with the upper surface 115 of the base portion 105 (see FIGURE 11, where FIGURE 11(a) is a perspective view, and FIGURE 11(b) is a cross-sectional view). This causes the mobile device 12 to be arranged substantially flat (i.e. parallel to the upper surface 115 of the base portion 105), but having the second surface of the mobile device 12 facing outward into the cavity 14 of the enclosure 16. Accordingly, the mobile device 12 has been rotated 180° about the one edge 130 of the mobile device 12 compared to its original, starting position. When the slidable tray 70 of the enclosure 16 is opened to allow the user to remove the mobile device 12 from the assessment module 10 (for instance, by sliding out the slidable tray 70 of the assessment module 10), then the mobile device 12 has been rotated (see FIGURE 12).

It will be understood that, beneficially, images can be taken by the one or more camera 26 of the assessment module 10 at various stages of the rotation, in order to obtain images of the different surfaces (including the edges) of the mobile device 12. Ideally more than one camera 26 is mounted within the assessment module 10, in order that every edge of the mobile device 12 can be imaged by the assessment module 10. It will be understood that more minor scratches at the surface of the mobile device 12 may only be apparent from certain angles, and so the rotation of the mobile device 12 is particularly useful for better evaluation of the cosmetic condition of the mobile device 12.

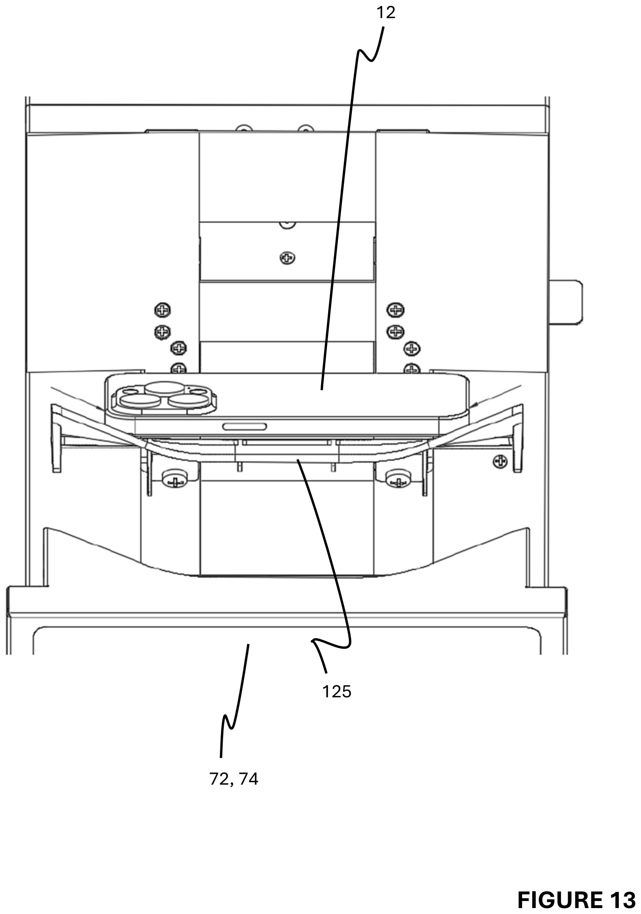

The concave shape of the concave support plate 125 offers various advantages compared to a flat support plate 110. FIGURE 13 shows the concave support plate 125 from the perspective of the camera 26 in FIGURE 9(b), mounted in the enclosure 16 above the assessment area 24. In particular, the concave support plate 125 is configured to receive the mobile device 12 so that the concave support plate 125 contacts the mobile device 12 at a portion of the perimeter edge of the second face of the mobile device 12. The geometric features of the concave support plate 125 help to ensure that the mobile device 12 is supported throughout the rotation process. The smoothly protruding edges of the plate 125 not only hold the tested mobile device 12 in the desired position but also make it possible to test devices of various sizes. The concave support plate 125 is shaped to enable the rotation of mobile devices of a variety of shapes and sizes, including folding mobile devices. This mechanism ensures reliable and safe rotation for both standard phones and foldable devices with dimensions of up to 160mm×130mm and an inner display measuring 7.6 inches in diagonal (for example, the Galaxy Z Fold).

Although examples according to the disclosure have been described with reference to specific illustrative examples, other approaches according to the disclosure may be used. Certain features may be omitted or substituted, for example as indicated herein. Each feature disclosed in this specification, unless stated otherwise, may be replaced by alternative features serving the same, equivalent or similar purpose. Thus, unless stated otherwise, each feature disclosed is one example only of a generic series of equivalent or similar features.

In this detailed description of the various examples and/or embodiments, for the purposes of explanation, numerous specific details are set forth to provide a thorough understanding of the examples and/or embodiments disclosed. One skilled in the art will appreciate, however, that these various examples and/or embodiments may be practiced with or without these specific details. Furthermore, one skilled in the art can readily appreciate that the specific sequences in which methods are presented and performed are illustrative and it is contemplated that the sequences can be varied and still remain within the scope of the various examples and/or embodiments disclosed herein.

As used herein, including in the claims, unless the context indicates otherwise, singular forms of terms are to be construed as including the plural form and vice versa. For instance, unless the context indicates otherwise, a singular reference herein including in the claims, such as "a" or "an" means "one or more". Throughout the description and claims of this disclosure, the words "comprise", "including", "having" and "contain" and variations of the words, for example "comprising" and "comprises" or similar, mean "including but not limited to", and are not intended to (and do not) exclude other components. Also, the use of "or" is inclusive, such that the phrase "A or B" is true when "A" is true, "B" is true, or both "A" and "B" are true.

The use of any and all examples, or exemplary language ("for instance", "such as", "for example" and like language) provided herein, is intended merely to better illustrate the disclosure and does not indicate a limitation on the scope of the disclosure unless otherwise claimed. No language in the specification should be construed as indicating any non-claimed element as essential to the practice of the disclosure.

The terms "first" and "second" may be reversed without changing the scope of the disclosure. That is, the terms are relative such that an element termed a "first" element or position may instead be termed a "second" element or position and an element termed a "second" element or position may instead be considered a "first" element or position.

Any steps described in this specification may be performed in any order or simultaneously unless stated or the context requires otherwise. Moreover, where a step is described as being performed after another step, this does not preclude intervening steps being performed.

It is also to be understood that, for any given component, example or embodiment described herein, any of the possible candidates or alternatives listed for that component may generally be used individually or in combination with one another, unless implicitly or explicitly understood or stated otherwise. It will be understood that any list of such candidates or alternatives is merely illustrative and not limiting, unless implicitly or explicitly understood or stated otherwise.

## Claims

1. An assessment module for evaluating a mobile device, the assessment module comprising:
an enclosure arranged to receive the mobile device to be assessed within a cavity defined by the enclosure, the enclosure housing at least one sensor arranged within the cavity;
a processor; and
memory, the memory storing computer-executable instructions that, when executed by the processor, cause the assessment module to:
establish a data connection with the mobile device, the data connection for exchange of data between the mobile device and the assessment module;
obtain an outcome of one or more diagnostic test on the mobile device, each of the one or more diagnostic test for obtaining information on a characteristic of the mobile device or on the performance of a function of the mobile device; and
generate a report providing an evaluation of the mobile device based on the results of the one or more diagnostic test, for output to a user of the assessment module;
wherein the computer-executable instructions causing the assessment module to obtain an outcome of one or more diagnostic test on the mobile device comprises the computer-executable instructions causing the assessment module to:
receive, from the mobile device via the data connection, the outcome of one or more diagnostic test; and/or
obtain from the at least one sensor the outcome of one or more diagnostic test.

2. The assessment module of claim 1, wherein the assessment module further comprises a speaker arranged to emit sound waves within the enclosure, and wherein the computer-executable instructions causing the assessment module to receive, from the mobile device via the data connection, the outcome of one or more diagnostic test comprises the computer-executable instructions causing the assessment module to:
receive, from the mobile device via the data connection, an instruction to emit an audio transmission from the speaker of the assessment module, the audio transmission for recording at one or more microphone at the mobile device;
emit the audio transmission from the speaker of the assessment module;
receive, from the mobile device via the data connection, a recording of the audio transmission recorded at the one or more microphone at the mobile device; and
wherein the computer-executable instructions further cause the assessment module to:
perform audio analysis of the recording of the audio transmission to obtain information on the performance of the microphone at the mobile device for inclusion in the report providing the evaluation of the mobile device.

3. The assessment module of claim 2, wherein the computer-executable instructions causing the assessment module to perform audio analysis of the recording of the audio transmission comprises the computer-executable instructions causing the assessment module to:
compare a frequency spectrum of the recorded audio transmission to a frequency spectrum of the audio transmission emitted from the speaker of the assessment module; and
determine a measure of similarity therebetween.

4. The assessment module of any preceding claim, wherein one of the at least one sensor comprises a microphone arranged to receive sound waves within the enclosure, and wherein the computer-executable instructions causing the assessment module to obtain from at least one sensor the outcome of one or more diagnostic test comprises the computer-executable instructions causing the assessment module to:
receive, from the mobile device via the data connection, an instruction to initiate recording of an audio broadcast from one or more speaker at the mobile device;
record the audio broadcast received at the microphone of the assessment module;
wherein the computer-executable instructions further cause the assessment module to:
perform audio analysis of the recorded audio broadcast to obtain information on the performance of the one or more speaker at the mobile device for inclusion in the report providing the evaluation of the mobile device;
optionally, wherein the computer-executable instructions causing the assessment module to perform audio analysis of the recorded audio broadcast comprises the computer-executable instructions causing the assessment module to:
compare a frequency spectrum of the recorded audio broadcast to the frequency spectrum of the specified audio broadcast emitted from the one or more speaker at the mobile device; and
determine a measure of similarity therebetween.

5. The assessment module of any preceding claim, wherein one of the at least one sensor comprises a camera arranged within the enclosure to provide an image of a surface of the mobile device, and wherein the computer-executable instructions causing the assessment module to obtain from at least one sensor at the assessment module the outcome of one or more diagnostic test comprises the computer-executable instructions causing the assessment module to:
obtain one or more image of at least one surface of the mobile device from the camera;
and wherein the computer-executable instructions further cause the assessment module to:
assess the cosmetic condition of the mobile device from the one or more image for inclusion in the report providing the evaluation of the mobile device;
optionally, wherein causing the assessment module to obtain one or more image of at least one surface of the mobile device comprises causing the assessment module to obtain a plurality of images during rotation of the mobile device inside the enclosure, each of the plurality of images obtained at a different stage of the rotation.

6. The assessment module of claim 5, wherein the computer-executable instructions causing the assessment module to obtain from at least one sensor at the assessment module the outcome of one or more diagnostic test comprises the computer-executable instructions causing the assessment module to:
receive, from the mobile device via the data connection, an instruction to initiate obtaining one or more image on a display screen of the mobile device during a period when the screen is illuminated;
obtain, at the camera arranged within the enclosure, one or more image of the display screen of the mobile device during a period when the screen is illuminated;
and wherein the assessment module is further configured to:
perform analysis of the image of the screen to obtain information on the performance of the display screen at the mobile device for inclusion in the report providing the evaluation of the mobile device.

7. The assessment module of claim 5 or claim 6, wherein the enclosure further comprises one or more graphical object, the one or more graphical object arranged inside the enclosure to be visible to at least one camera at the mobile device within the cavity defined by the enclosure, the computer-executable instructions further causing the assessment module to:
receive from the mobile device, via the data connection, at least one image of the one or more graphical object obtained by the at least one camera at the mobile device; and
perform analysis of the at least one image of the one or more graphical object, to obtain information on the performance of the at least one camera at the mobile device for inclusion in the report providing the evaluation of the mobile device.

8. The assessment module of claim 7, wherein one of the one or more graphical object is a QR code, and wherein the computer-executable instructions causing the assessment module to perform analysis of the at least one image of the one or more graphical object comprises the computer-executable instructions further causing the assessment module to analyse the performance of the auto-focus function of the at least one camera at the mobile device; and/or
wherein one of the one or more graphical object is a graphical object comprising at least three colours, and wherein the computer-executable instructions causing the assessment module to perform analysis of the at least one image of the one or more graphical object comprises the computer-executable instructions further causing the assessment module to analyse the colour accuracy of the at least three colours in the at least one image of the one or more graphical object.

9. The assessment module of any preceding claim, wherein the assessment module configured to receive, from the mobile device, the result of one or more diagnostic test performed at the mobile device comprises the assessment module configured to:
receive an indication of the presence or absence of a physical or embedded SIM within the mobile device, and optionally a test of the ability of an identified physical or embedded SIM to connect to a telecommunication network; and/or
receive a geolocation signal from a global navigation satellite system (GNSS) transmitter, and wherein the processor is further configured to compare the location identified by the geolocation signal with a predetermined geographical location of the assessment module to obtain information on the performance of a GNSS receiver at the mobile device.

10. The assessment module of any preceding claim, wherein the assessment module configured to obtain an outcome of one or more diagnostic test on the mobile device comprises the assessment module configured to:
establish a Bluetooth communication between the assessment module and the mobile device, to determine functionality of Bluetooth capability at the mobile device; and/or
establish a WiFi communication between the assessment module and the mobile device to determine functionality of WiFi capability at the mobile device; and/or
receive, from the mobile device, an assessment of the health of the battery of the mobile device; and/or
receive, from the mobile device, an identification of the presence of any non-original components within the mobile device; and/or
receive a measurement of a light level at a light sensor at the mobile device; and/or
receive a measurement of an orientation and/or angular velocity by a gyroscope at the mobile device; and/or
receive a measurement of a bearing of the mobile device at a compass at the mobile device; and/or
receive a measurement of an acceleration of the mobile device at an accelerometer at the mobile device; and/or
receive a measurement of an air pressure at a barometer at the mobile device; and/or
receive from the mobile device measurements of one or more touch interaction received at the different areas of the touchscreen mobile device, in response to instructions issued to a user of the mobile device to provide touch inputs at different areas of the touchscreen.

11. The assessment module of any preceding claim, further comprising a microphone arranged to receive sound waves within the enclosure, and wherein the assessment module configured to obtain from at least one sensor at the assessment module the outcome of one or more diagnostic test performed on the mobile device by the assessment module, the at least one sensor being the microphone, comprises the assessment module configured to:
receive an instruction from the mobile device, via the data connection, to initiate a recording at the microphone during a subsequent period of activation of a vibration motor at the mobile device;
record sound waves received at the microphone of the assessment module during the period of activation of the vibration motor at the mobile device;
and wherein the processor is further configured to:
determine the presence or absence of sounds from the vibration motor in the recording of the sound waves received at the microphone of the assessment module, to obtain information on the performance of the vibration motor at the mobile device.

12. The assessment module of any preceding claim, further comprising one or more cameras arranged within the enclosure, and wherein the assessment module configured to obtain from at least one sensor at the assessment module the outcome of one or more diagnostic test performed on the mobile device by the assessment module, the at least one sensor being the one or more cameras, comprises the assessment module configured to:
receive an instruction from the mobile device, via the data connection, to initiate obtaining of one or more image from the one or more cameras during illumination of a camera flash at the mobile device;
obtain one or more image from the one or more cameras during illumination of the camera flash at the mobile device;
and wherein the assessment module is further configured to:
determine the presence or absence of light from the camera flash at the mobile device in the obtained one or more image, to obtain information on the performance of the camera flash at the mobile device.

13. The assessment module of any preceding claim, further comprising a mechanism for rotation of the mobile device inside the enclosure, the mechanism comprising:
a base portion;
a flat support plate, for supporting the mobile device received in the enclosure, wherein, in a first position, the mobile device is arranged having a first planar face opposing a planar surface of the flat support plate and a second planar face, which is opposite to the first planar face, facing outwardly into the cavity defined by the enclosure;
a concave support plate arranged at a fixed angle to an upper surface of the base portion, the concave support plate for receiving the mobile device during rotation;
wherein tilting of the flat support plate relative to the concave support plate causes the mobile device to pivot about one edge of the mobile device, so as to tip the mobile device towards the concave support plate, wherein the concave support plate is configured to receive the mobile device so that, in a second position, the first planar face of the mobile device is facing outwardly into the cavity defined by the enclosure.

14. The assessment module of claim 13, wherein the second planar face of the mobile device terminates at a second perimeter edge, wherein the concave support plate is configured to receive the mobile device so that the concave support plate contacts the mobile device at a portion of the second perimeter edge.

15. The assessment module of claim 13 or 14, wherein the concave support plate is arranged to be moveable relative to the flat support plate to change a separation therebetween, and wherein after the concave support plate receiving the mobile device, increasing the separation of the concave support plate from the flat support plate causes the mobile device to further pivot about the one edge of the mobile device until the mobile device, in a third position, is arranged having at least part of the second planar face opposing the upper surface of the base portion.
